# EUROPEAN PATENT APPLICATION

(11) **EP 4 692 989 A1**
(43) Date of publication of application: **11.02.2026**
(21) Application number: 23935070.5
(22) Date of filing: 28.11.2023
(51) Int. Cl.: G06F 1/3234

(54) **CONTROL METHOD FOR ALWAYS-ON DISPLAY, AND ELECTRONIC DEVICE AND STORAGE MEDIUM**

(30) Priority: 28.04.2023 CN 202310491114
(71) Applicant: Honor Device Co., Ltd., Shenzhen, Guangdong 518040 (CN)
(72) Inventor: ZHUANG, Ruigang, Shenzhen, Guangdong 518040 (CN); LIU, Fuhou, Shenzhen, Guangdong 518040 (CN); LI, Hai, Shenzhen, Guangdong 518040 (CN)
(74) Representative: Epping - Hermann - Fischer
(86) International application number: PCT/CN2023/134750
(87) International publication number: WO 2024/221902

(57) **Abstract**

This application provides an always on display control method, an electronic device, and a storage medium, and relates to the field of display technologies. When a screen-off trigger condition is met, a display driver receives a backlight instruction and a power-off instruction, the display driver controls, in response to the backlight instruction, to turn off backlight of a display screen, and the display driver intercepts the power-off instruction, and does not control the display screen to power off. In this case, an IC chip of the display screen is not triggered to power off. Then, when the display driver receives an AOD display instruction, because the IC chip of the display screen is in a power-on state, it is unnecessary to trigger the IC chip of the display screen to power on. Therefore, the display driver can more quickly trigger the display screen to display an always on pattern. According to the solutions of this application, in a process of starting AOD after screen-off is triggered, power-off and power-on procedures of the display screen are omitted. In this case, a time consumed by starting the AOD is greatly reduced. Therefore, after screen-off is triggered, starting the always on display becomes quicker, and user experience is improved.

## Description

This application claims priority to Chinese Patent Application No. 202310491114.X, filed with the China National Intellectual Property Administration on April 28, 2023 and entitled "ALWAYS ON DISPLAY CONTROL METHOD, ELECTRONIC DEVICE, AND STORAGE MEDIUM", which is incorporated herein by reference in its entirety.

### TECHNICAL FIELD

This application relates to the field of communication technologies, and in particular, to an always on display control method, an electronic device, and a storage medium.

### BACKGROUND

With rapid development of electronic technologies, electronic devices such as a smartphone and a tablet computer are provided with increasing more functions, and have become indispensable tools in people's lives and work. By using a mobile phone as an example, a user often lights up a screen of the mobile phone to view information such as a time and a notification. To facilitate the user to view basic information such as a time, and reduce power consumption of the electronic device, an always on display (always on display, AOD) function of the electronic device emerges.

An implementation principle of the AOD function is as follows: Assuming that the mobile phone has enabled the always on display function, after the screen of the electronic device is turned off, some pixels of the screen may be lit up to display information such as a clock, a date, an electricity quantity, and a message notification, while other pixels of the screen are always in a turn-off state. For example, the pixels in the turn-off state are presented in black, so that the user can conveniently view the foregoing information without lighting up the entire screen of the electronic device, thereby lowering power consumption of the electronic device.

Currently, when the electronic device changes from screen-on to screen-off, an always on pattern is displayed only after a relatively long time elapses after screen-off. In other words, it takes a relatively long time to enter always on display after screen-off, and in this case, there is a problem of an excessively long always on display delay.

### SUMMARY

This application provides an always on display control method, an electronic device, and a storage medium. In a process of triggering screen-off and starting AOD, power-off and power-on procedures are omitted. Therefore, a time consumed by starting the AOD is greatly reduced, and user experience is improved.

According to a first aspect, this application provides an always on display control method. The method is applied to an electronic device, the electronic device includes a display screen and a processor, the processor includes an AOD application, a display driver, and a power manager service module, and the method includes:

When a screen-off trigger condition is met, the display driver receives a backlight instruction and a power-off instruction from the power manager service module;
the display driver sends only the backlight instruction in the backlight instruction and the power-off instruction to the display screen, so that the display screen turns off backlight of the display screen based on the backlight instruction, and keeps an integrated circuit (integrated circuit, IC) chip of the display screen in a power-on state;
the display driver receives an AOD display instruction from the AOD application; and
the display driver controls, in response to the AOD display instruction, the display screen to display an always on pattern.

According to the always on display control method provided in an embodiment of this application, when the screen-off trigger condition is met, the display driver receives the backlight instruction and the power-off instruction that are delivered by an upper layer, the display driver controls to turn off the backlight of the display screen in response to the backlight instruction, and the display driver intercepts the power-off instruction, and does not control the display screen to power off. In this way, the IC chip of the display screen is not triggered to power off, thereby saving power-off time. Then, when the display driver receives the AOD display instruction delivered by the AOD application, because the IC chip of the display screen is in the power-on state, it is unnecessary to trigger the IC chip of the display screen to power on. Therefore, the display driver can more quickly trigger the display screen to display the always on pattern. According to the solutions of this application, in a process of starting AOD after screen-off is triggered, power-off and power-on procedures of the display screen are omitted. In this case, a time consumed by starting the AOD is greatly reduced. Therefore, after screen-off is triggered, starting the always on display becomes quicker, and user experience is improved.

In a related technology, after screen-off is triggered by pressing a power button by a user or when no operation is performed before timeout, the display screen turns off the backlight, and then the IC chip of the display screen is powered off. Then, starting an AOD procedure is triggered: The display screen is powered on first, and then the display screen displays the always on pattern to complete the AOD procedure. Power-off of the display screen may cause relatively high time consumption. Similarly, power-on of the display screen after powering off may also cause relatively high time consumption. Therefore, in the related technology, starting the AOD procedure after screen-off is triggered is relatively highly time-consuming, which causes a problem of slow AOD implementation after screen-off.

In comparison with the related technology, in the solutions of this application, time consumption caused by power-off and power-on of the display screen are saved during starting the AOD procedure after screen-off is triggered, which can greatly reduce a time required for starting the AOD after screen-off is triggered, thereby improving user experience.

For example, in the related technology, a hardware requirement based on a screen chip specification takes about 300 ms. This mainly refers to a time required for power-off of the display screen and power-on of the display screen. Because power-off of the display screen and power-on of the display screen are omitted in the solutions of this application, about 300 ms can be saved. In comparison with at least 600 ms required in the AOD procedure in the related technology, this application can save about 300 ms. Therefore, a time required for starting the AOD after screen-off is triggered is greatly reduced.

It should be noted that, although a process of delivering a no-power-off indication message to the display driver in Embodiment 1 of this application also takes a time, compared with a time consumed by power-off and power-on of the display screen, a time required for transmitting the no-power-off indication message is extremely short, which can be ignored.

In some possible implementations, the method further includes: When the screen-off trigger condition is met, the display driver receives the no-power-off indication message from the power manager service module.

In this case, that the display driver sends only the backlight instruction in the backlight instruction and the power-off instruction to the display screen includes: In response to the no-power-off indication message, the display driver sends only the backlight instruction in the backlight instruction and the power-off instruction to the display screen.

It should be noted that a time at which the display driver receives the no-power-off indication message is earlier than a time at which the display driver receives the backlight instruction and the power-off instruction.

According to the solution provided in this application, when the screen-off trigger condition is met, the display screen is not powered off first, but the no-power-off indication message is first sent to the display driver. The no-power-off indication message is used to indicate the display driver to perform no-power-off logic when receiving the power-off instruction. Then, when the display driver receives the power-off instruction, the display driver performs the no-power-off logic, that is, does not drive the IC chip of the display screen to power off. In a procedure of triggering starting the AOD, the display screen is not powered off, so that the always on pattern can be directly displayed after the AOD is triggered, to complete the always on display, without requiring that the display screen displays the always on pattern after being powered on as in the related technology. In an AOD implementation procedure provided in this application, power-off of the display screen and power-on of the display screen are omitted, thereby greatly reducing a time required for starting the AOD after screen-off is triggered.

In some possible implementations, the screen-off trigger condition may be as follows: When the display screen is in a screen-on state, an operation of pressing the power button by the user is received. For example, when a mobile phone is in a screen-on state, if the user presses a power button of the mobile phone, screen-off of the mobile phone is triggered. In this case, a display screen of the mobile phone switches from the screen-on state to a screen-off state. In this case, all pixels of the display screen are dimmed and turned off, and then an always on pattern is displayed. After first preset duration (for example, 5 seconds), the display screen no longer displays the always on pattern, and all the pixels are dimmed and turned off.

In some other possible implementations, the screen-off trigger condition may be as follows: Continuous duration in which no user operation is received when the display screen is in a screen-on state is greater than or equal to second preset duration. For example, the second preset duration may be duration preset by a system, for example, 15 seconds; or may be duration customized by the user, for example, 1 minute.

For example, when the mobile phone is in the screen-on state, a timer counts a period of time in which no user input is received. If timing duration exceeds the preset second preset duration (for example, 1 minute), the mobile phone automatically triggers screen-off.

According to the solutions of this application, in a process of starting the AOD after screen-off is triggered, the power-off and power-on procedures of the display screen are omitted. In this case, a time consumed by starting the AOD is greatly reduced. Therefore, after screen-off is triggered, starting the always on display becomes quicker, and user experience is improved.

In some possible implementations, after the display driver sends only the backlight instruction in the backlight instruction and the power-off instruction to the display screen, the method further includes: The display driver generates a first message, where the first message is used to indicate that the IC chip of the display screen is in a power-off state; and the display driver sends the first message to the power manager service module.

Different from a solution in the related technology in which the display driver sends the backlight instruction and the power-off instruction to the display screen, in the solutions of this application, after receiving the backlight instruction and the power-off instruction from the power manager service module, the display driver sends only the backlight instruction to the display screen, intercepts the power-off instruction, and keeps the IC chip of the display screen in the power-on state.

In addition, different from the related technology, when the display driver does not control the display screen to power off, the display driver returns, to the power manager service module, a "false" message that the IC chip of the display screen is powered off. In this case, the power manager service module determines, based on the message, to complete a display screen power-off procedure. Because the IC chip of the display screen is not powered off, time consumption caused by power-off of the display screen can be saved.

In some possible implementations, the processor further includes a surface drawing SurfaceFlinger service module and a hardware composer HWC.

The AOD display instruction is triggered by the AOD application when the AOD application detects the first message. After being triggered by the AOD application, the AOD display instruction reaches the display driver through transmission by using the SurfaceFlinger service module and the HWC.

In some possible implementations, that the display driver receives an AOD display instruction from the AOD application includes: The display driver receives a power-on instruction from the HWC, where the power-on instruction is triggered after the HWC receives the AOD display instruction; the display driver returns a response message of the power-on instruction to the HWC, where the response message is used to indicate that the display screen is in a power-on state; and the display driver receives the AOD display instruction transmitted by using the HWC.

In some possible implementations, the power-off instruction and the backlight instruction are triggered by the power manager service module, and reach the display driver after being transmitted by the SurfaceFlinger service module and the HWC. The first message is triggered by the display driver, and is returned to the power manager service module after being transmitted by the HWC and the SurfaceFlinger service module.

In some possible implementations, that the display driver controls, in response to the AOD display instruction, the display screen to display an always on pattern includes: The display driver obtains the always on pattern from the IC chip of the display screen in response to the AOD display instruction; and the display driver sends the AOD display instruction and the always on pattern to the display screen.

In some other possible implementations, that the display driver controls, in response to the AOD display instruction, the display screen to display an always on pattern includes: The display driver delivers the AOD display instruction to the display screen in response to the AOD display instruction; and in response to the AOD display instruction, the display screen obtains the always on pattern from the IC chip of the display screen and displays the always on pattern.

According to the solutions of this application, because the IC chip of the display screen is in the power-on state, after the AOD starts, the IC chip of the display screen does not need to be powered on again. The display driver can quickly obtain the always on pattern from the IC chip of the display screen, sends the AOD display instruction and the always on pattern to the display screen, and controls the display screen to display the always on pattern. According to the solutions of this application, a time consumed by starting the AOD is greatly reduced. Therefore, after screen-off is triggered, starting the always on display becomes quicker, and user experience is improved.

In some possible implementations, after the display driver controls the display screen to display the always on pattern, the method further includes: After duration in which the display screen displays the always on pattern is greater than or equal to first preset duration, the display driver sends the power-off instruction to the display screen, to control the IC chip of the display screen to power off.

In the related technology, after screen-off is triggered, the backlight is turned off, and the IC chip of the display screen is controlled to power off. Then, the AOD starts, and after the IC chip of the display screen is controlled to power on, the display screen is controlled to display the always on pattern. Different from the related technology, in the solutions of this application, after screen-off is triggered, only the backlight is turned off, and the IC chip of the display screen is not powered off. Then, the AOD starts, and the IC chip of the display screen does not need to be powered on. In this way, the display screen can be controlled to display the always on pattern more quickly, and after the display screen displays the always on pattern, the IC chip of the display screen is controlled to power off. Because the IC chip of the display screen is in the power-on state, the IC chip of the display screen does not need to be powered on again after the AOD starts. Therefore, time consumption caused by power-on of the display screen can be saved. According to the solutions of this application, a time consumed by starting the AOD is greatly reduced. Therefore, after screen-off is triggered, starting the always on display becomes quicker, and user experience is improved.

The processor may further include a touchscreen service module, a touchscreen interface, and a touchscreen driver.

In some possible implementations, the no-power-off indication message is generated by the power manager service module, and reaches the display driver after being transmitted by the AOD application, the touchscreen service module, the touchscreen interface, and the touchscreen driver.

In some other possible implementations, the no-power-off indication message is generated by the power manager service module, and reaches the display driver after being transmitted by the touchscreen service module, the touchscreen interface, and the touchscreen driver.

The processor may further include a display service module and a display interface.

In some possible implementations, the no-power-off indication message is generated by the power manager service module, and reaches the display driver after being transmitted by the AOD application, the display service module, and the display interface.

In the foregoing some possible implementations, the no-power-off indication message is generated by the power manager service module, and reaches the display driver after being transmitted by the display service module and the display interface.

According to the solutions of this application, a time consumed by starting the AOD is greatly reduced. Therefore, after screen-off is triggered, starting the always on display becomes quicker, and user experience is improved.

According to a second aspect, this application provides an always on display control apparatus. The apparatus includes a unit configured to perform the method in the first aspect. The apparatus may correspondingly perform the method described in the first aspect. For related description of the unit in the apparatus, refer to the description in the first aspect. For brevity, details are not described herein again.

The method described in the first aspect may be implemented by hardware, or may be implemented by executing corresponding software by hardware. The hardware or the software includes one or more modules or units corresponding to the foregoing functions, for example, a processing module or unit or a display module or unit.

According to a third aspect, this application provides an electronic device. The electronic device includes a display screen, a processor, a processor and a computer program or instructions stored in the memory. The processor is configured to execute the computer program or the instructions, to enable the method in the first aspect to be performed.

According to a fourth aspect, this application provides a computer-readable storage medium. The computer-readable storage medium stores a computer program (which may also be referred to as instructions or code) used to implement the method in the first aspect. For example, when the computer program is executed by a computer, the computer is enabled to perform the method in the first aspect.

According to a fifth aspect, this application provides a chip, including a processor. The processor is configured to read and execute a computer program stored in a memory, to perform the method in any one of the first aspect and the possible implementations of the first aspect. Optionally, the chip further includes a memory, and the memory is connected to the processor by using a circuit or a wire.

According to a sixth aspect, this application provides a chip system, including a processor. The processor is configured to read and execute a computer program stored in a memory, to perform the method in any one of the first aspect and the possible implementations of the first aspect. Optionally, the chip system further includes a memory, and the memory is connected to the processor by using a circuit or a wire.

According to a seventh aspect, this application provides a computer program product. The computer program product includes a computer program (which may also be referred to as instructions or code), and when the computer program is executed by an electronic device, the electronic device is enabled to implement the method in the first aspect.

It may be understood that, for beneficial effects of the second aspect to the seventh aspect, refer to related descriptions in the first aspect. Details are not described herein again.

### BRIEF DESCRIPTION OF DRAWINGS

FIG. 1 is a schematic diagram of an application scenario of an always on display control method according to an embodiment of this application;
FIG. 2A and FIG. 2B are a schematic diagram of two scenarios in which an always on display control method is applied according to an embodiment of this application;
FIG. 3 is a schematic diagram of a structure of an electronic device according to an embodiment of this application;
FIG. 4 is a schematic diagram of a software architecture of an electronic device according to an embodiment of this application;
FIG. 5 is a schematic flowchart of a method for starting always on display after screen-off is triggered according to a related technology;
FIG. 6A and FIG. 6B are a diagram of a time sequence of a method for starting always on display after screen-off is triggered according to a related technology;
FIG. 7 is a schematic diagram of a time consumption situation of a method for starting always on display after screen-off is triggered according to a related technology;
FIG. 8 is a schematic flowchart of an always on display control method according to Embodiment 1 of this application;
FIG. 9A and FIG. 9B are a diagram of a time sequence of an always on display control method according to Embodiment 1 of this application;
FIG. 10 is a schematic diagram of a time consumption situation of an always on display control method according to Embodiment 1 of this application;
FIG. 11 is a schematic flowchart of an always on display control method according to Embodiment 2 of this application;
FIG. 12A and FIG. 12B are a diagram of a time sequence of an always on display control method according to Embodiment 2 of this application;
FIG. 13 is a schematic flowchart of an always on display control method according to Embodiment 3 of this application;
FIG. 14A and FIG. 14B are a diagram of a time sequence of an always on display control method according to Embodiment 3 of this application;
FIG. 15 is a schematic flowchart of an always on display control method according to Embodiment 4 of this application; and
FIG. 16A and FIG. 16B are a diagram of a time sequence of an always on display control method according to Embodiment 4 of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Clearly, the described embodiments are some rather than all of embodiments of this application. Based on the embodiments of this application, all other embodiments obtained by a person of ordinary skill in the art without creative efforts fall within the protection scope of this application.

In this specification, the term "and/or" is an association relationship that describes associated objects, and indicates that three relationships may exist. For example, "A and/or B" may indicate the following three cases: only A exists, both A and B exist, and only B exists. The character "/" in this specification indicates an "or" relationship between associated objects. For example, "A/B" indicates A or B.

The terms "first", "second", and the like in the specification and the claims in this specification are used to distinguish between different objects, and are not used to describe a particular order of the objects. In the description of embodiments of this application, unless otherwise stated, "a plurality of" means two or more. For example, "a plurality of processing units" means two or more processing units, and "a plurality of elements" means two or more elements.

In the embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, the words such as "example" or "for example" are intended to present related concepts in a specific manner.

With rapid development of electronic technologies, electronic devices such as a smartphone and a tablet computer are provided with increasing more functions, and have become indispensable tools in people's lives and work. By using a mobile phone as an example, a user often lights up a screen of the mobile phone to view information such as a time and a notification. To facilitate the user to view basic information such as a time, and reduce power consumption of the electronic device, an always on display (always on display, AOD) function of the electronic device emerges.

An implementation principle of the AOD function is as follows: Assuming that the mobile phone has enabled the always on display function, after the screen of the electronic device is turned off, some pixels of the screen may be lit up to display information such as a clock, a date, an electricity quantity, and a message notification, while other pixels of the screen are always in a turn-off state. For example, the pixels in the turn-off state are presented in black, so that the user can conveniently view the foregoing information without lighting up the entire screen of the electronic device, thereby lowering power consumption of the electronic device.

For example, after the always on display function is enabled on the electronic device, when the electronic device changes from screen-on to screen-off, an implementation of AOD is triggered, that is, an always on pattern is displayed by lighting a local area of the screen. Then, after being displayed for a period of time (5 seconds), the always on pattern automatically disappears, and the entire screen is turned off. For ease of description, an example in which the electronic device is a mobile phone is used for description in the following.

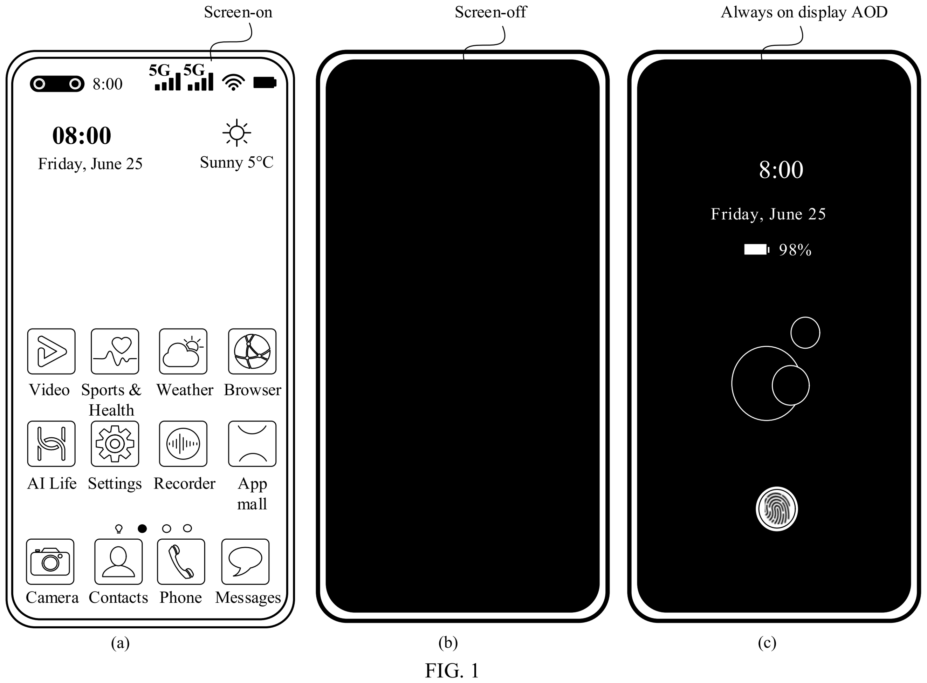

For example, FIG. 1 is a schematic diagram of an always on display effect after a mobile phone changes from screen-on to screen-off. As shown in (a) in FIG. 1, a display screen of the mobile phone is in an on state, which is briefly referred to as a screen-on state. As shown in (b) in FIG. 1, the mobile phone changes from a screen-on state to a screen-off state (or referred to as a screen-off state), and all pixels of the display screen are turned off. As shown in (c) in FIG. 1, the mobile phone switches from the screen-off state to an always on display state. When the electronic device is in the always on display state, some pixels of the screen are lit up to display information such as a clock, a date, and a notification, which is convenient for a user to view the foregoing information, and can reduce power consumption of the electronic device.

Currently, when the electronic device changes from screen-on to screen-off, an always on pattern is displayed only after a relatively long time. In other words, it takes a relatively long time to enter always on display after screen-off, and there is a problem of an excessively long always on display delay.

A main reason for slowness in a current procedure is as follows: A hardware requirement based on a screen chip specification needs to take about 300 ms, and a software needs to take about 300 ms to process an AOD procedure. In this case, an overall procedure takes a minimum of about 600 ms. Consequently, it takes a long time to enter always on display, and further the display is slow.

To resolve the problem of slow always on display, an embodiment of this application provides an always on display control method. An improvement is performed on a software system of the mobile phone, to shorten a time consumed by starting an AOD procedure after screen-off is triggered, thereby improving user experience.

To better understand the embodiments of this application, the following briefly describes the embodiments of this application.

When screen-off is triggered in a screen-on state, a power manager service may deliver a no-power-off indication message to a display driver in advance, to indicate the display driver to perform no-power-off logic when receiving a power-off instruction. In this case, when the display driver receives a screen-off indication message delivered by an upper layer, the display driver does not perform screen-off processing in response to the screen-off indication message. In this way, the display screen is not triggered to power off and turn off, thereby saving power-off time. Then, when the display driver receives an always on display instruction delivered by an AOD application, the display driver triggers the display screen to display an always on pattern, and directly starts an AOD procedure, without requiring the display screen to first power on and turn on, and then display the always on pattern, thereby saving power-on time. According to the solutions of this application, in a process of starting the AOD procedure after screen-off is triggered, power-off and power-on procedures are omitted. Therefore, a time consumed by starting the AOD is greatly reduced, and user experience is improved.

An optimization solution of always on display performance described in this embodiment of this application can support all current products and adapt to all domestic and overseas versions, and has universality and versatility.

In this embodiment of this application, triggering screen-off in the screen-on state may include the following two possible implementation scenarios:

### Scenario 1: Screen-off is triggered by pressing a power button

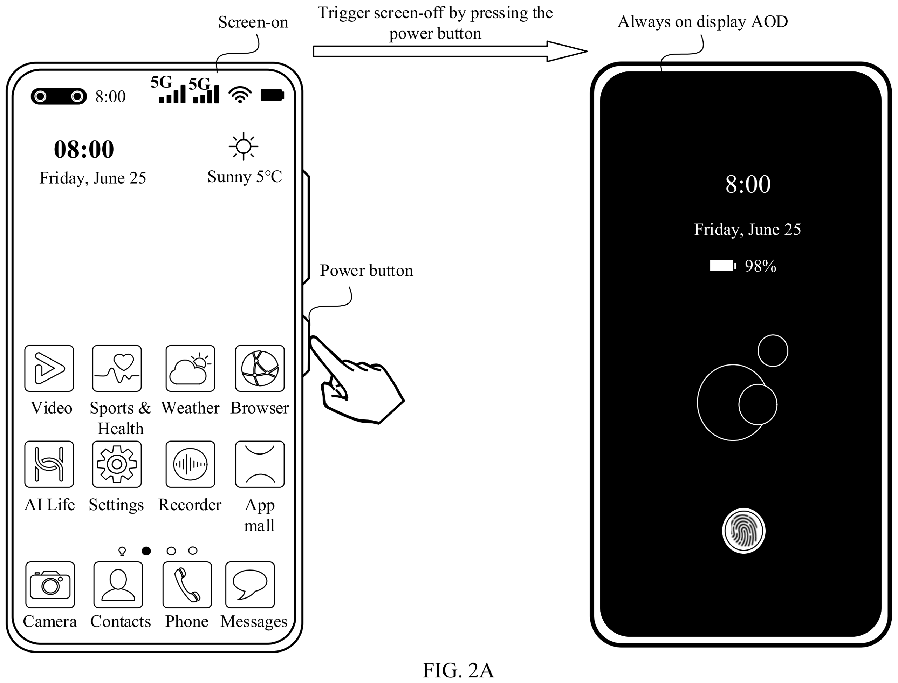

As shown in FIG. 2A, when the mobile phone is in the screen-on state, if the user presses the power button of the mobile phone, the mobile phone is triggered to screen off. In this case, the display screen of the mobile phone switches from the screen-on state to the screen-off state. In this case, all pixels of the display screen are dimmed and turned off, and then the always on pattern is displayed. After specific duration (for example, 5 seconds), the display screen no longer displays the always on pattern, and all the pixels are dimmed and turned off.

### Scenario 2: Screen-off is triggered due to no operation before timeout

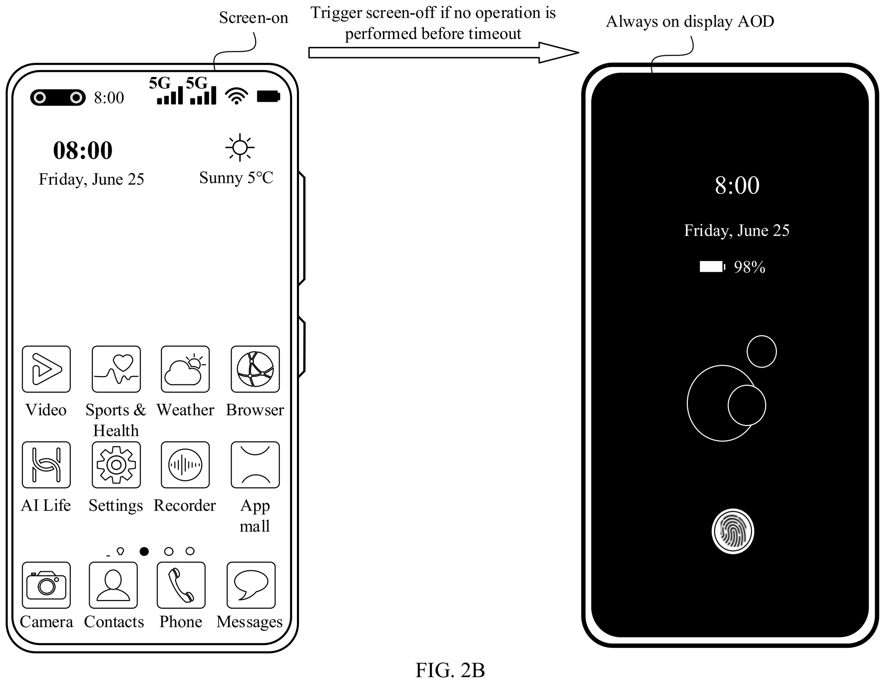

As shown in FIG. 2B, when the mobile phone is in the screen-on state, when the mobile phone has not received a user input (no operation before timeout), the mobile phone is triggered to automatically turn off the screen. For example, when the mobile phone is in the screen-on state, a timer counts a period of time in which no user input is received. If timing duration exceeds preset specific duration (for example, 1 minute), the mobile phone automatically triggers screen-off. In this case, the display screen of the mobile phone switches from the screen-on state to the screen-off state. In this case, all pixels of the display screen are dimmed and turned off, and then the always on pattern is displayed. After specific duration, the display screen no longer displays the always on pattern, and all the pixels are dimmed and turned off.

It should be noted that the foregoing two application scenarios are applicable to the always on display control method provided in this embodiment of this application. To be specific, in the scenario in which screen-off is triggered by pressing the power button in the screen-on state, the always on display control method provided in this embodiment of this application may be performed. Alternatively, in the scenario in which screen-off is triggered due to no operation before timeout in the screen-on state, the always on display control method provided in this embodiment of this application may be performed. According to the always on display control method provided in this embodiment of this application, a problem of a long time consumed by entering the always on display in the scenario in which screen-off is triggered due to no operation before timeout or screen-off is triggered by pressing the power button can be resolved.

For ease of description, in the following embodiments, that the scenario in which screen-off is triggered by pressing the power button is used an example to describe an implementation of the always on display control method. For an implementation of the scenario in which screen-off is triggered due to no operation before timeout, details are not described. For details, refer to detailed descriptions of the implementation of the scenario in which screen-off is triggered by pressing the power button.

It should be noted that the electronic device described in this application is an electronic device with a display screen and with an always on display function, and may be a smart terminal such as a mobile phone, a tablet computer, or a smartwatch. A specific technology and a specific device form that are used by the electronic device are not limited herein. For ease of description, an example in which the electronic device is a mobile phone is used in the following embodiments.

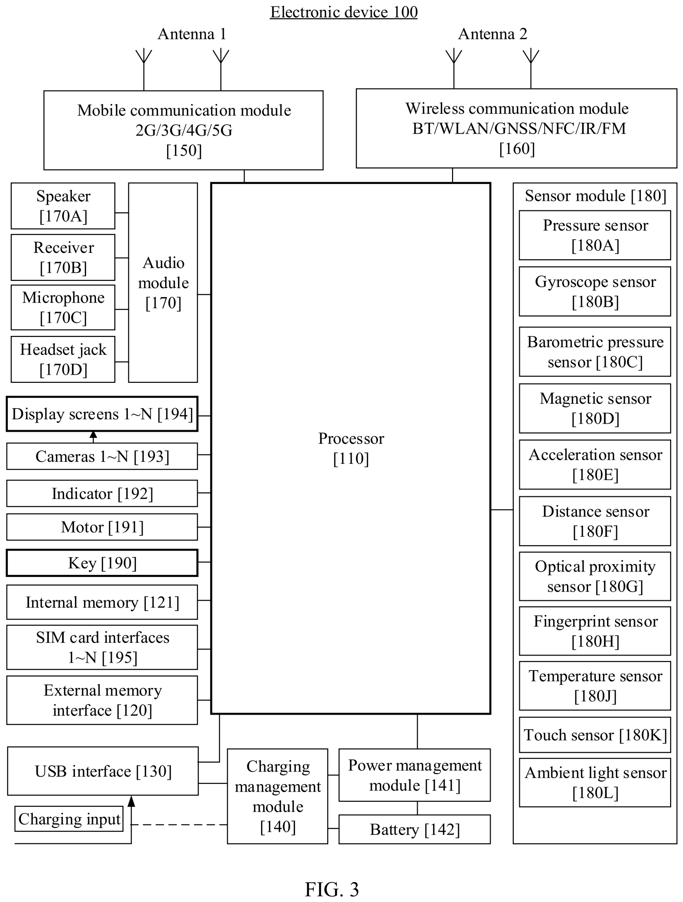

FIG. 3 is a schematic diagram of a structure of an electronic device according to an embodiment of this application. An electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. For example, the processor 110 is configured to perform the always on display control method in embodiments of this application.

The controller may be a nerve center and a command center of the electronic device 100. The controller may generate an operation control signal based on instruction operation code and a time sequence signal, to complete control of instruction fetching and instruction execution.

A memory may be further disposed in the processor 110 to store instructions and data. In some embodiments, the memory in the processor 110 is a cache memory. The memory may store instructions or data recently used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

The external memory 120 is usually an external memory. In this embodiment of this application, the external memory is a memory other than the memory of the electronic device and a cache of a processor, and the memory is usually a nonvolatile memory.

The internal memory 121 may also be referred to as a "memory", and may be configured to store computer-executable program code, and the executable program code includes instructions. The internal memory 121 may include a program storage area and a data storage area. The program storage area may store an operating system, an application required by at least one function (for example, a sound playback function or an image playback function), and the like.

The display screen 194 is configured to display an image, a video, and the like. The display screen 194 includes a display panel. The display panel may use an organic light-emitting diode (organic light-emitting diode, OLED). In some embodiments, the electronic device 100 may include one or N display screens 194, where N is a positive integer greater than 1.

The touch sensor 180K is also referred to as a "touch panel" or a touchscreen (touch panel, TP) sensor. The touch sensor 180K may be disposed on the display screen 194. The touch sensor 180K and the display screen 194 constitute a touchscreen, also referred to as a "touch control screen". The touch sensor 180K is configured to detect a touch operation performed on or near the touch sensor. The touch sensor may transfer the detected touch operation to the application processor to determine a type of a touch event. A visual output related to the touch operation may be provided by using the display screen 194.

The electronic device 100 implements a display function by using the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The button 190 includes a power button, and the power button is configured to trigger lighting up or turning off a display screen. For example, when the display screen is in a screen-on state, if a user presses the power button, a state of the display screen changes from the screen-on state to a screen-off state.

The foregoing specifically describes this embodiment of this application by using the electronic device 100 as an example. It should be understood that the structure shown in this embodiment of this application does not constitute a specific limitation on the electronic device 100. The electronic device 100 may have more or fewer components than those shown in the figure, or may combine two or more components, or may have different component configurations. Various components shown in the figure may be implemented in hardware, software, or a combination of hardware and software including one or more signal processing and/or application-specific integrated circuits.

In addition, an operating system runs on the foregoing components, for example, an iOS operating system developed by Apple Inc., an Android open-source operating system developed by Google Inc., or a Windows operating system developed by Microsoft Corporation. An application may be installed and run on the operating system.

An operating system of the electronic device 100 may use a layered architecture, an event-driven architecture, a microkernel architecture, a microservice architecture, or a cloud architecture. In embodiments of this application, an Android (Android) system with a layered architecture is used as an example to describe a software structure of the electronic device 100.

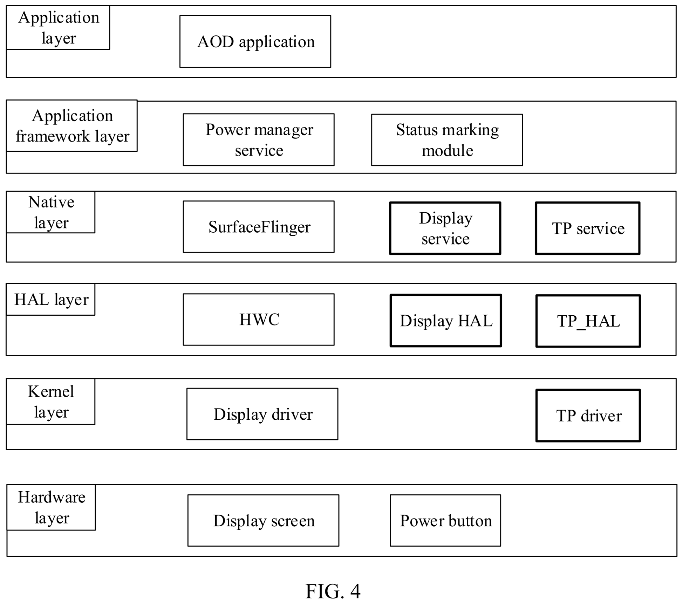

FIG. 4 is a block diagram of a software structure of an electronic device 100 according to an embodiment of this application.

In a layered architecture, software is divided into several layers, and each layer has a clear role and task. The layers communicate with each other through software interfaces. In some embodiments, an Android system is divided into five layers: an application (applications) layer, an application framework (application framework) layer, a system Native library (which is referred to as a Native layer), a hardware abstraction layer (hardware abstraction layer, HAL), and a kernel (kernel) layer from top to bottom. For ease of description, a hardware layer interacting with the foregoing software structure is further embodied in FIG. 4.

It should be noted that the Android system is a Linux-based operating system, and is mainly used for a portable device. Development of applications at an upper layer (for example, the application layer and the application framework layer) in the Android system is generally based on Java. Because it is not easy to implement some bottom-layer tasks by using Java, when tasks in terms of aspects such as a local service, a link library, or a hardware driver are involved, it is usually necessary to allow C programs to implement the tasks, and the C programs are run in the system Native library. The system Native library includes an interface for Java to invoke C++ code.

The application layer may include a series of application packages. For example, the application layer may include an AOD application and another application. This is not limited in this embodiment of this application.

The application framework layer provides an application programming interface (application programming interface, API) and a programming framework for an application at the application layer. The application framework layer includes some predefined functions. For example, the application framework layer may include a power manager service (power manager service, PMS) module, a status marking module, and the like. This is not limited in this embodiment of this application.

The power manager service module is configured to manage power-on and power-off of the display screen.

The status marking module is configured to mark, based on an instruction of the power manager service module, a power-on state/a power-off state of the display screen.

For example, after the display screen is powered on, the power manager service module indicates the status marking module to mark a status of the display screen as ON. After the display screen is powered off, the power manager service module indicates the status marking module to mark the status of the display screen as OFF.

The Native layer may include a plurality of functional modules.

For example, in the solutions of this application, the Native layer includes a surface drawing (SurfaceFlinger) service module. A function of the SurfaceFlinger service module is to accept graphical display data from a plurality of sources, synthesize the data, and then send the data to a display device. Image display may be specifically completed in a collaborative way by a plurality of categories, such as the SurfaceFlinger, an HWC, and the display screen.

For example, in the solutions of this application, the Native layer may further include a TP service module. A function of the TP service module is to provide a touchscreen service, and complete touchscreen processing in combination with a TP_HAL and a TP driver.

For another example, in the solutions of this application, the Native layer may further include a display service module. A function of the display service module is to provide a display service, and complete display processing in combination with a display HAL and a display driver.

The HAL layer may include a hardware composer (hwcomposer, HWC). The HWC has a function or a capability of combining and displaying image data by using hardware, and provides hardware support for a SurfaceFlinger service.

For example, in the solutions of this application, the HAL layer may further include the TP_HAL, to provide hardware support for a TP service.

For another example, in the solutions of this application, the HAL layer may further include the display HAL, to provide hardware support for a display service.

The hardware layer may include a display driver integrated circuit (display driver integrated circuit, DDIC) and the display screen (such as an OLED or an LCD). The DDIC is not shown in the figure.

The kernel layer is a layer between hardware and software. The kernel layer includes the display driver. The display driver is configured to drive the DDIC to complete processing and implementation of display.

It should be noted that although the Android system is used as an example for description in this embodiment of this application, a basic principle thereof is also applicable to an electronic device based on an operating system such as iOS or Windows.

An execution body of the always on display control method provided in the embodiments of this application may be the foregoing electronic device, or may be a functional module and/or a functional entity in the electronic device that is capable of implementing the always on display control method. In addition, the solutions of this application may be implemented in a hardware and/or software manner. The specific manner may be determined based on an actual use requirement. This is not limited in the embodiments of this application. By using the electronic device as an example, the following provides, with reference to the accompanying drawings, example descriptions for the always on display control method provided in the embodiments of this application.

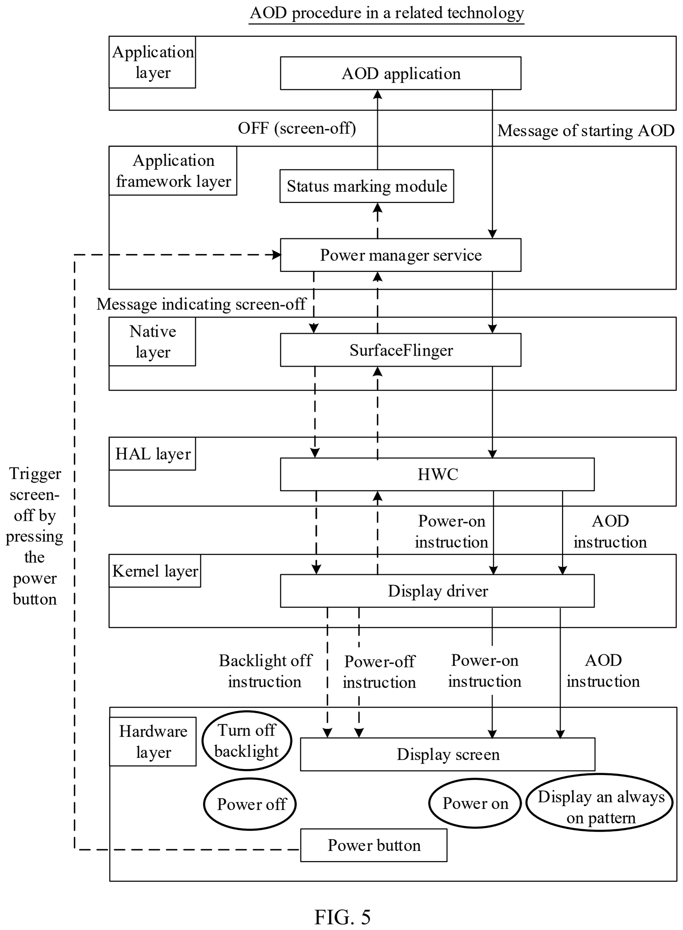

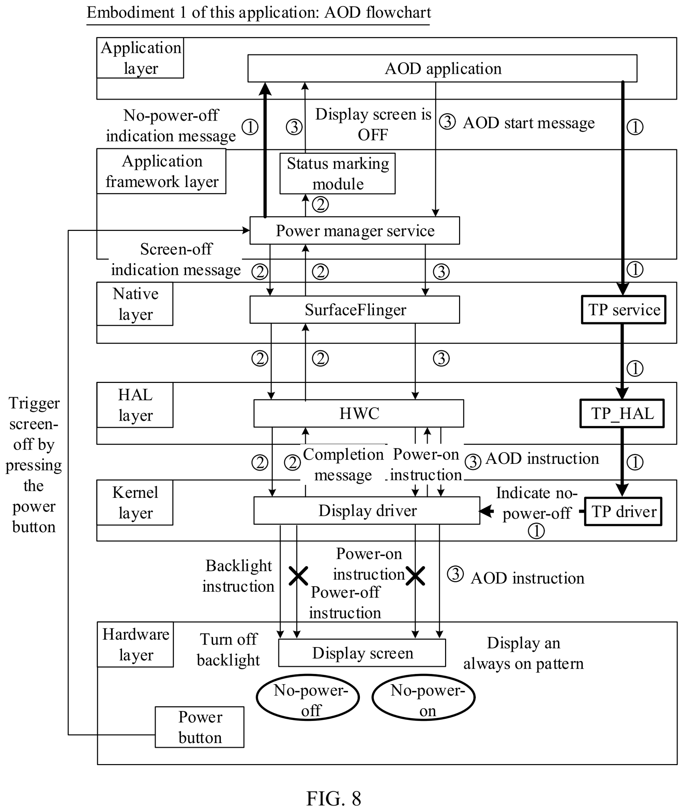

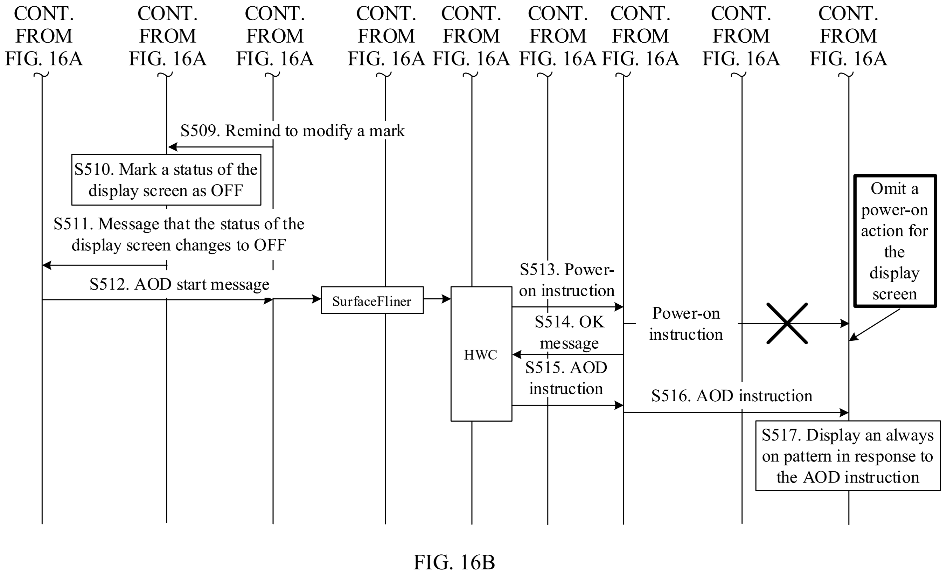

To help highlight improvements of the embodiments of this application relative to a related technology, the following compares the solutions of this application with the related technology in terms of aspects such as starting an AOD procedure, a time sequence diagram, and a time consumption situation after screen-off is triggered, and describes the improvements. With reference to FIG. 5 to FIG. 7, an AOD procedure, a time sequence diagram, and a time consumption situation in the related technology are first described. Then, with reference to FIG. 8 to FIG. 16A and FIG. 16B, the always on display control method provided in the embodiments of this application is described in terms of aspects such as an AOD procedure, a time sequence diagram, and a time consumption situation. A scenario in which screen-off is triggered by pressing a power button is used an example for description herein.

First, it should be noted that the display screen includes the following three parts:
(1) IC chip: may provide display content for a screen when the IC chip is in a power-on state.
(2) Screen: namely, a liquid crystal screen, is configured to display an image provided by the IC chip.
(3) Backlight panel: is located behind the screen. The backlight panel is configured to provide a light source to the screen. When the backlight panel is disabled, the screen is turned off. When the backlight panel is enabled, the screen is lit, and content displayed on the screen is visible.

In this embodiment of this application, a backlight instruction and a power-off instruction are involved in a screen-off procedure.

The backlight instruction is used to instruct to disable the backlight panel of the display screen.

The power-off instruction is used to instruct to power off the IC chip of the display screen. Power-off of the IC chip of the display screen may be briefly referred to as power-off of the display screen.

In the AOD procedure, a power-on instruction and an AOD instruction are involved.

The power-on instruction, also referred to as an AOD display instruction, is used to instruct to power on the IC chip of the display screen. Power-on of the IC chip of the display screen may be briefly referred to as power-on of the display screen.

The AOD instruction is used to instruct the display screen to display an always on pattern. The AOD instruction is also referred to as an AOD display instruction.

FIG. 5 is a schematic diagram of a software architecture for starting an AOD procedure after screen-off is triggered in a related technology. Starting the AOD procedure after screen-off is triggered may be divided into two phases: A first phase: A procedure of triggering screen-off and completing screen-off; and a second phase: A procedure of triggering AOD and completing the AOD. For the procedure of triggering screen-off and completing screen-off, refer to a direction shown in a dashed-line arrow. The procedure of triggering the AOD and completing the AOD is described in a direction shown in a solid line arrow.

### First phase: The procedure of triggering screen-off and completing screen-off

When an electronic device is in a screen-on state, if a user presses a power button of the electronic device, a power manager service module of the electronic device receives a message that the user presses the power button of the electronic device.

It should be noted herein that, for ease of description, it schematically shows herein that the message that the user presses the power button of the electronic device is directly transferred from the power button to the power manager service module. In actual implementation, the message that the user presses the power button of the electronic device may be transferred by using a plurality of modules in a software architecture to reach the power manager service module. This may be specifically determined based on an actual use requirement, and is not limited in this embodiment of this application.

The power manager service module delivers a screen-off indication message, and the screen-off indication message sequentially passes through a SurfaceFlinger service module and an HWC in the software architecture, and then reaches a display driver. In response to the screen-off indication message, the display driver delivers the backlight instruction and the power-off instruction to the display screen, to drive the display screen to turn off backlight and power off. In response to the backlight instruction and the power-off instruction, the display screen turns off the backlight and is powered off, to complete screen-off.

After the display screen completes screen-off, the display driver returns a message that "screen-off is complete" to an upper layer. The message that "screen-off is complete" sequentially passes through the HWC and the SurfaceFlinger service module in the software architecture, and then reaches the power manager service module.

After receiving the message that "screen-off is complete", the power manager service module indicates a status marking module to mark a status of the display screen as OFF. OFF indicates that the display screen is powered off.

### Second phase: The procedure of triggering the AOD and completing the AOD

An AOD application continuously monitors marked content of the status marking module. When the AOD application detects that the marked content is OFF, the AOD application learns that the display screen is powered off, which meets an AOD trigger condition. In this case, starting the AOD procedure is triggered.

The AOD application delivers an AOD start message, the AOD start message includes the AOD instruction, and the AOD start message sequentially passes through the power manager service module and the SurfaceFlinger service module in the software architecture, and then reaches the HWC. In response to the AOD start message, the HWC first delivers the power-on instruction to the display driver. Correspondingly, the display driver drives, in response to the power-on instruction, the IC chip of the display screen to power on. Then, the HWC delivers the AOD instruction to the display driver. The display driver obtains a preset always on pattern from the IC chip in response to the AOD instruction. Then, the display driver sends the AOD instruction and the always on pattern to the display screen, and then the display screen displays the always on pattern to complete the always on display.

It may be learned from FIG. 5 that, in a process of starting the AOD procedure after screen-off is triggered, according to the related technology, power-off of the display screen needs to be complete first, and after power-off of the display screen is complete, starting the AOD is triggered. Because the display screen is powered off, in an AOD implementation procedure, the display screen needs to be triggered to be powered on first, and then the display screen is triggered to display the always on pattern, to complete the always on display. Power-off of the display screen may cause relatively high time consumption. Similarly, power-on of the display screen may also cause relatively high time consumption.

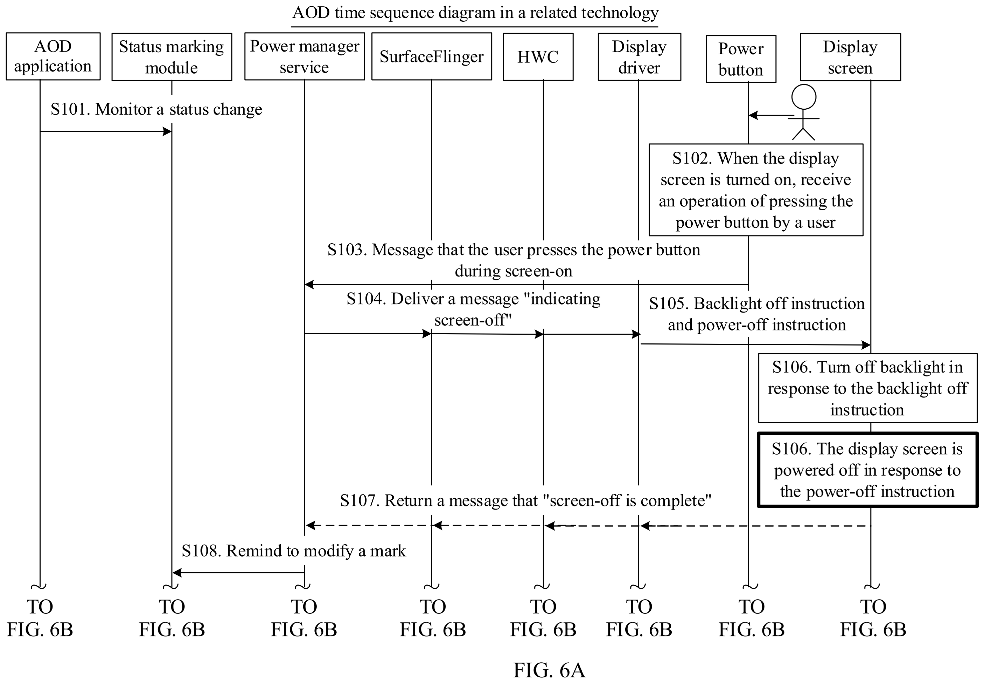

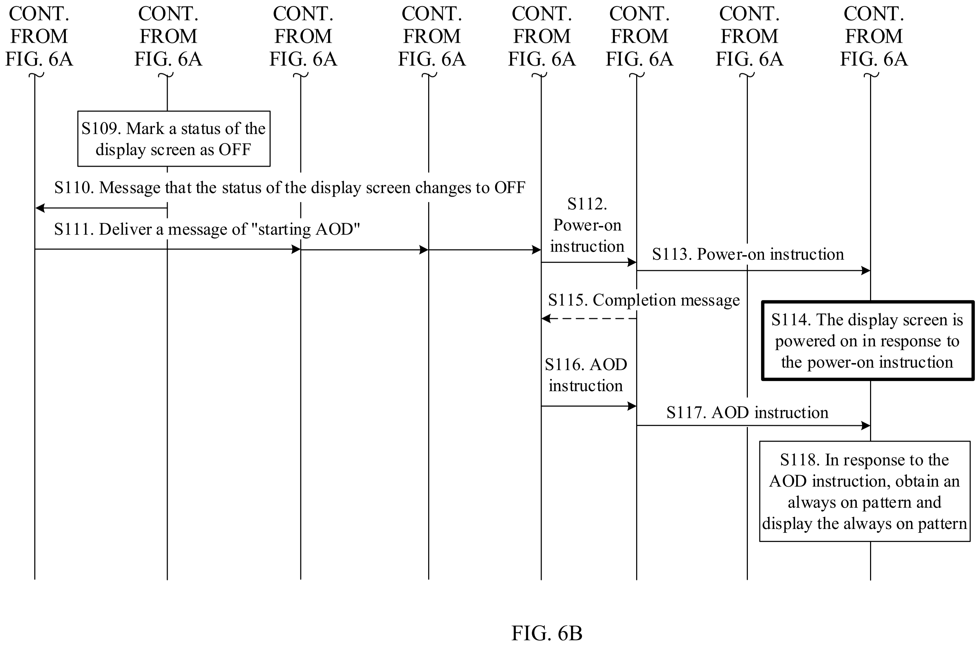

On a basis of FIG. 5, FIG. 6A and FIG. 6B are a schematic diagram of a time sequence of starting an AOD procedure after screen-off is triggered in a related technology. As shown in FIG. 6A and FIG. 6B, the method includes the following steps S101-S118.

S101. The AOD application monitors the marked content of the status marking module, to learn about a status change of power-on/power-off of the display screen.

The AOD application monitors in real time whether the marked content of the status marking module changes to OFF, and OFF indicates that the display screen is powered off.

When the AOD application detects that the marked content of the status marking module changes to OFF, the AOD application learns that the display screen is powered off. In this case, the AOD procedure starts.

When the AOD application does not detect that the marked content of the status marking module changes to OFF, the AOD application does not respond.

S102. When the display screen is turned on, the power button receives an operation of pressing the power button by the user.

S103. The power button reports, to the power manager service module, a message that the user presses the power button when the display screen is turned on.

S104. The power manager service module delivers the screen-off indication message, where the screen-off indication message sequentially passes through the SurfaceFlinger service module and the HWC, and then reaches the display driver.

S105. The display driver delivers the backlight instruction and the power-off instruction to the display screen in response to the screen-off indication message, to drive the display screen to turn off the backlight and power-off.

The backlight instruction is used to instruct to disable the backlight panel of the display screen.

The power-off instruction is used to control the IC chip of the display screen to power off.

It should be noted that, in actual implementation, when a screen-off condition is met, the display screen usually disables the backlight panel, and the IC chip of the display screen is powered off, to complete screen-off.

S106. The display screen turns off the backlight in response to the backlight instruction, and the display screen responds to the power-off instruction and the display screen is powered off.

In actual implementation, the display driver delivers the backlight instruction and the power-off instruction to a display driver integrated circuit. Then, the display driver integrated circuit controls, based on the backlight instruction, the display screen to turn off the backlight, and controls, based on the power-off instruction, the IC chip of the display screen to power off.

S107. The display driver returns the message that "screen-off is complete" to the upper layer, where the completion message sequentially passes through the HWC and the SurfaceFlinger service module, and finally reaches the power manager service module.

S108. The power manager service module notifies the status marking module to mark the status of the display screen as OFF.

S109. The status marking module marks the status of the display screen as OFF based on an indication.

OFF indicates that the display screen is powered off.

S110. The status marking module sends a message that the status of the display screen changes to OFF to the AOD application, and the AOD application detects that the status of the display screen changes to OFF.

When the AOD application detects that the status of the display screen changes to OFF, the AOD application learns that the display screen is powered off, which meets the AOD trigger condition. In this case, starting the AOD procedure is triggered.

S111. The AOD application delivers the AOD start message to the power manager service module. The AOD start message sequentially passes through the power manager service module and the SurfaceFlinger service module, and then reaches the HWC.

S112. The HWC sends the power-on instruction to the display driver in response to the AOD start message.

The power-on instruction is used to control the IC chip of the display screen to power on.

S113. The display driver sends the power-on instruction to the display screen, to drive the IC chip of the display screen to power on.

S114. The display screen is powered on in response to the power-on instruction.

In actual implementation, the display driver delivers the power-on instruction to the display driver integrated circuit. Then, the display driver integrated circuit controls, based on the power-on instruction, the IC chip of the display screen to power on.

S115. The display driver returns a completion message to the HWC.

S116. After receiving the completion message, the HWC sends the AOD instruction to the display driver.

The AOD instruction is used to instruct the display screen to display the always on pattern, and the always on pattern is an image sent by the IC chip to the display screen.

S117. The display driver sends the AOD instruction to the display screen, to drive the display screen to display the always on pattern.

S118. The display screen displays the always on pattern in response to the AOD instruction.

The display driver obtains the preset always on pattern from the IC chip in response to the AOD instruction. Then, the display driver sends the AOD instruction and the always on pattern to the display screen, and then the display screen displays the always on pattern to complete the AOD procedure.

It may be learned from FIG. 6A and FIG. 6B that, in a process of starting the AOD procedure after screen-off is triggered, according to the related technology, power-off of the display screen needs to be complete first, and after power-off of the display screen is complete, the AOD is triggered. Because the display screen is powered off, in an AOD implementation procedure, the display screen needs to be powered on first, and then may display the always on pattern, to complete the always on display.

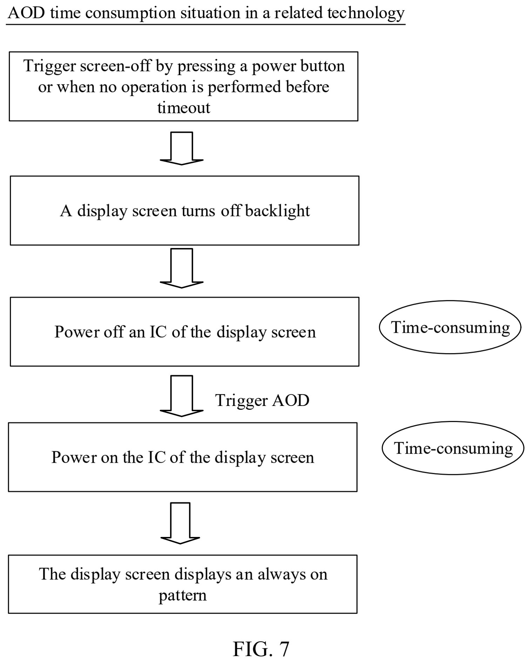

The foregoing respectively describes, by using FIG. 5 and FIG. 6A and FIG. 6B, starting the AOD procedure and the time sequence diagram after screen-off is triggered in the related technology. The following analyzes the time consumption situation of the AOD procedure in the related technology with reference to FIG. 7.

As shown in FIG. 7, in the related technology, after screen-off is triggered by pressing the power button by the user or when no operation is performed before timeout, the display screen turns off the backlight, and then the IC chip of the display screen is powered off. Then, starting the AOD procedure is triggered: The display screen is powered on first, and then the display screen displays the always on pattern to complete the AOD procedure. Power-off of the display screen may cause relatively high time consumption. Similarly, power-on of the display screen after powering off may also cause relatively high time consumption. Therefore, in the related technology, starting the AOD procedure after screen-off is triggered is relatively highly time-consuming, which causes a problem of slow AOD implementation after screen-off.

For the problem that starting the AOD procedure after screen-off is triggered in the foregoing related technology is time-consuming, in an embodiment of this application, a procedure is improved. The IC chip of the display screen is controlled to not power off after screen-off is triggered, so that a power-off procedure and a power-on procedure of the IC chip of the display screen are omitted, and time consuming is greatly reduced, thereby quickly implementing the AOD and improving user experience.

For an always on display control method, four embodiments are provided in embodiments of this application, which are described in detail below with reference to the accompanying drawings.

**Embodiment 1:** A power manager service module delivers a no-power-off indication message by using an AOD application and a touchscreen channel.

FIG. 8 is a schematic diagram of a software architecture for starting an AOD procedure after screen-off is triggered according to Embodiment 1 of this application. A procedure of starting AOD after screen-off is triggered may be divided into two phases: A first phase: A procedure of triggering screen-off, indicating no-power-off, and completing screen-off; and a second phase: A procedure of triggering the AOD and completing the AOD.

### First phase: The procedure of triggering screen-off, indicating no-power-off, and completing screen-off

When an electronic device is in a screen-on state, if a user presses a power button of the electronic device, the power manager service module of the electronic device receives a message that the user presses the power button of the electronic device.

Different from the related technical procedure shown in FIG. 6A and FIG. 6B, in this embodiment of this application, after the power manager service module receives the message that the user presses the power button of the electronic device, the power manager service module successively performs two actions:

First, referring to a procedure direction marked with ① in FIG. 8, the power manager service module reports the no-power-off indication message to the AOD application based on the message. The AOD application forwards the no-power-off indication message to a display driver at a lower layer. As shown in FIG. 8, the no-power-off indication message sequentially passes through the AOD application, a TP service, a TP_HAL, and a TP driver, and then reaches the display driver. The no-power-off indication message is used to indicate the display driver to perform no-power-off logic when receiving a power-off instruction. It may be understood that if the display driver receives the power-off instruction, the display driver performs the no-power-off logic, that is, does not drive an IC chip of a display screen to power off.

Then, referring to a procedure direction marked with ② in FIG. 8, the power manager service module delivers a screen-off indication message to indicate to start a screen-off procedure. The screen-off indication message may include a backlight instruction and a power-off instruction, the backlight instruction is used to instruct to turn off backlight of the display screen, and the power-off instruction is used to instruct to power off the IC chip of the display screen. As shown in FIG. 8, the screen-off indication message sequentially passes through a SurfaceFlinger service module and an HWC in the software architecture, and then reaches the display driver. Before receiving the screen-off indication message, the display driver has received the no-power-off indication message. In this case, in response to the screen-off indication message delivered by an upper layer in the software architecture, the display driver performs the no-power-off logic, that is, does not drive the IC chip of the display screen to power off, thereby reducing time consumption.

It should be noted that, different from the related technical procedure shown in FIG. 6A and FIG. 6B, in the solutions of this application, the display driver performs the no-power-off logic. As shown by "×" in FIG. 8, the display driver does not send the power-off instruction to the display screen. In this case, the IC chip of the display screen is not powered off.

After the display driver finishes performing the no-power-off logic, the display driver returns a completion message to the upper layer in the software architecture. The completion message sequentially passes through the HWC and the SurfaceFlinger service module in the software architecture, and finally reaches the power manager service module.

After receiving the completion message, the power manager service module indicates a status marking module to mark a status of the display screen as OFF. OFF indicates that the display screen is powered off.

### Second phase: The procedure of triggering the AOD and completing the AOD

Referring to a procedure direction marked with ③ in FIG. 8, the AOD application continuously monitors marked content of the status marking module. When the AOD application detects that a marked status of the display screen changes to OFF, the AOD application learns that the display screen is powered off, which meets an AOD trigger condition. In this case, starting the AOD procedure is triggered.

The AOD application delivers an AOD start message to the lower layer, and the AOD start message is used to indicate to start the AOD procedure. The AOD start message sequentially passes through the power manager service module and the SurfaceFlinger service module in the software architecture, and then reaches the HWC. The HWC delivers a power-on instruction to the display driver in response to the AOD start message. Because the display screen is not powered off, the display driver does not need to drive the IC chip of the display screen to power on. After the HWC receives an OK response message returned by the display driver, the HWC sends an AOD instruction to the display driver. The display driver obtains an always on pattern from the IC chip in response to the AOD instruction, and then the display driver sends the AOD instruction and the always on pattern to the display screen. The display screen displays the always on pattern in response to the AOD instruction.

Different from the related technology shown in FIG. 6A and FIG. 6B, in this embodiment of this application, as shown in FIG. 8, the display screen is actually not powered off. In this case, the display screen does not need to perform a power-on procedure in response to the AOD instruction delivered by the upper layer in the software architecture, and the display screen can directly display the always on pattern to complete the always on display, thereby reducing time consumption.

It may be learned from FIG. 8 that, in a process of entering the AOD procedure after screen-off is triggered, according to the solution provided in Embodiment 1 of this application, the display screen is not powered off first after screen-off is triggered, but the no-power-off indication message is delivered by using the AOD application after screen-off is triggered. The no-power-off indication message sequentially passes through the TP service, the TP_HAL, and the TP driver, and then reaches the display driver. The no-power-off indication message is used to indicate the display driver to perform the no-power-off logic when receiving the power-off instruction. Then, when the display driver receives the power-off instruction, the display driver performs the no-power-off logic, that is, does not drive the IC chip of the display screen to power off, and then triggers the AOD. In an AOD implementation procedure, the display screen is not powered off, so that the always on pattern can be directly displayed after the AOD is triggered, to complete the always on display, without requiring that the display screen displays the always on pattern after being powered on as in the related technology. In the AOD implementation procedure provided in Embodiment 1 of this application, power-off of the display screen and power-on of the display screen are omitted, thereby greatly reducing a time required for starting the AOD after screen-off is triggered.

For example, in the related technology, a hardware requirement based on a screen chip specification takes about 300 ms. This mainly refers to a time required for power-off of the display screen and power-on of the display screen. Because power-off of the display screen and power-on of the display screen are omitted in the solutions of this application, about 300 ms can be saved. In comparison with at least 600 ms required in the AOD procedure in the related technology, this application can save about 300 ms. Therefore, a time required for starting the AOD after screen-off is triggered is greatly reduced.

It should be noted that, although a process of delivering the no-power-off indication message to the display driver in Embodiment 1 of this application also takes a time, compared with a time required for power-off and power-on of the display screen, a time required for delivering the no-power-off indication message from the power manager service module to the display driver in this application is extremely short, which can basically be omitted.

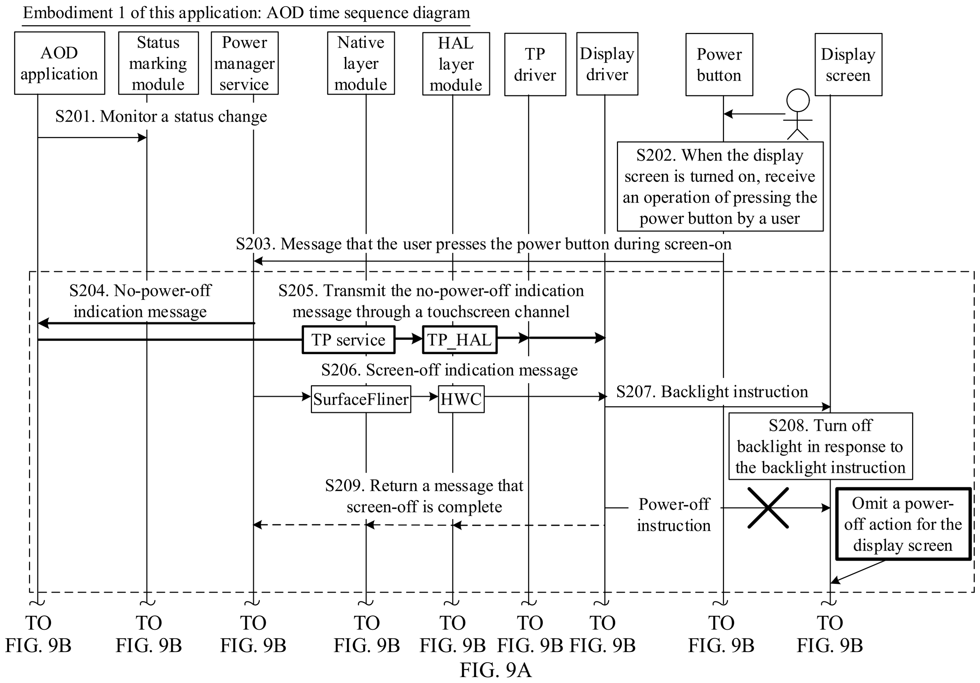

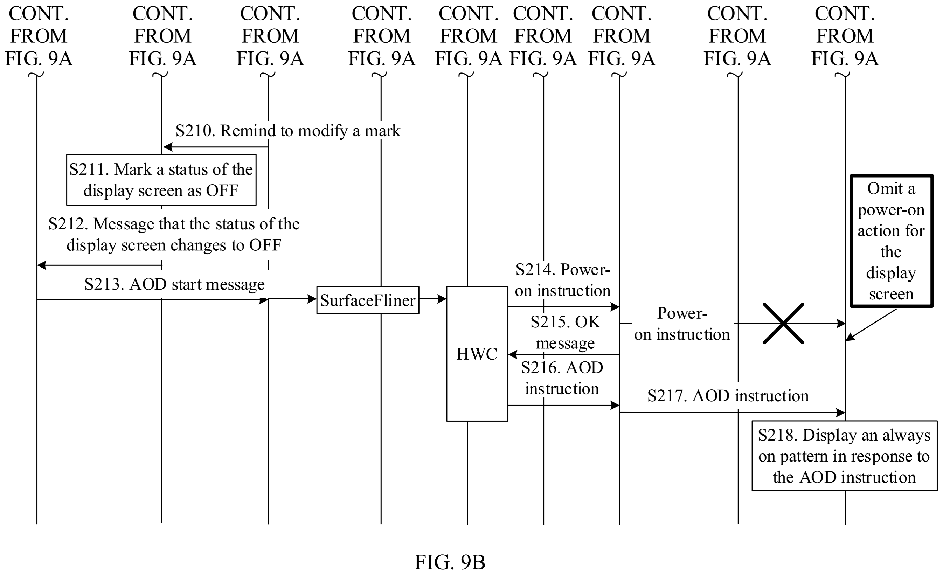

On a basis of FIG. 8, FIG. 9A and FIG. 9B are a schematic diagram of a time sequence of starting an AOD procedure after screen-off is triggered according to Embodiment 1 of this application. As shown in FIG. 9A and FIG. 9B, the method includes the following steps S201-S218.

S201. The AOD application monitors the marked content of the status marking module, to learn about a status change of power-on/power-off of the display screen.

The AOD application monitors in real time whether the marked content of the status marking module changes to OFF, and OFF indicates that the display screen is powered off.

When the AOD application detects that the marked content of the status marking module changes to OFF, the AOD application learns that the display screen is powered off. In this case, the AOD procedure starts. When the AOD application does not detect that the marked content of the status marking module changes to OFF, no response is made.

S202. When the display screen is turned on, the power button receives an operation of pressing the power button by the user.

S203. The power button reports, to the power manager service module, a message that the user presses the power button when the display screen is turned on (for briefly, a screen-off trigger message).

When the power manager service module receives the screen-off trigger message, the power manager service module triggers an AOD start event (or referred to as an AOD entry event).

It should be noted that, compared with the time sequence diagram in the related technology shown in FIG. 7, the time sequence diagram in Embodiment 1 of this application shown in FIG. 9A and FIG. 9B mainly differs in S204-S209 shown in a dashed-line box in FIG. 9A and S214-S218.

The following first describes a process of how to trigger no-power-off after the power manager service module receives the screen-off trigger message.

S204. The power manager service module reports the no-power-off indication message to an AOD module in response to the AOD start event.

The no-power-off indication message is used to indicate the display driver to perform the no-power-off logic when receiving the power-off instruction.

The no-power-off logic includes: not triggering power-off of the display screen, and returning a message that the display screen is powered off.

S205. The AOD module transmits the no-power-off indication message through the touchscreen channel, where the touchscreen channel includes the TP service, the TP_HAL, and the TP driver, and then reaches the display driver.

In this embodiment of this application, the no-power-off indication message starts from the power manager service module, sequentially passes through the AOD module, the TP service, the TP_HAL, and the TP driver, and then reaches the display driver.

It should be noted that the TP service, the TP_HAL, and the TP driver are usually configured to process touchscreen data, which can ensure that the display screen is in a screen-on state. An improvement of Embodiment 1 of this application lies in that after screen-off is triggered, the no-power-off indication message is transferred to the display driver by using the TP service, the TP_HAL, and the TP driver, to control the display driver to perform the no-power-off logic, so that the IC chip of the display screen is not powered off after screen-off is triggered, and directly displays the always on pattern and then is powered off. In this way, the AOD procedure can be quickly entered after screen-off is triggered, thereby improving user experience.

In Embodiment 1, a transmission path of the no-power-off indication message may be as follows: the power manager service module--the AOD module--the TP service--the TP_HAL-the TP driver--the display driver.

It may be understood that if the display driver receives the power-off instruction, the display driver performs the no-power-off logic, that is, does not drive the IC chip of the display screen to power off.

The foregoing steps describe a process in which the power manager service module delivers the no-power-off indication message to the display driver after receiving the screen-off trigger message. The following describes a process of how to complete power-off after the power manager service module receives the screen-off trigger message.

S206. The power manager service module delivers the screen-off indication message, where the screen-off indication message sequentially passes through the SurfaceFlinger service module and the HWC, and then reaches the display driver.

The screen-off indication message includes the backlight instruction and the power-off instruction.

In actual implementation, backlight of a display is controlled to turn off by using a backlight register. For example, based on the backlight instruction, writing 0 in the backlight register indicates turning off the backlight of the display. By reading content from the backlight register, it is determined, based on the content, whether the backlight of the display needs to be turned off.

S207. In response to the screen-off indication message, the display driver sends the backlight instruction to the display screen according to a screen-off procedure execution rule.

S208. The display screen turns off the backlight in response to the backlight instruction.

It should be noted that, after receiving the screen-off indication message, the display driver does not send the power-off instruction to the display screen according to a regular screen-off procedure execution rule, but performs the no-power-off logic, that is, the display driver does not send the power-off instruction to the display screen.

In comparison with the related technology, in this embodiment of this application, the display driver performs the no-power-off logic, that is, does not drive the IC chip of the display screen to power off. As shown by "×" in FIG. 9A, the display driver does not send the power-off instruction to the display screen. In this case, the IC chip of the display screen is not powered off. Then, as shown by a bold box in FIG. 9A, a power-off action is omitted for the display screen, thereby achieving a purpose of reducing time consumption.

S209. The display driver returns a message that "screen-off is complete" to the upper layer, where the message that "screen-off is complete" sequentially passes through the HWC and the SurfaceFlinger service module, and finally reaches the power manager service module.

S210. The power manager service module notifies the status marking module to mark the status of the display screen as OFF.

S211. The status marking module marks the status of the display screen as OFF based on an indication. OFF indicates that the display screen is powered off.

S212. The status marking module sends a status change message to the AOD application, and the AOD application detects that the status of the display screen changes to OFF.

When the AOD application detects that the status of the display screen changes to OFF, the AOD application learns that the display screen is powered off, which meets the AOD trigger condition. In this case, starting the AOD procedure is triggered.

S213. The AOD application delivers the AOD start message. The AOD start message sequentially passes through the power manager service module and the SurfaceFlinger service module, and finally reaches the HWC.

S214. The HWC sends the power-on instruction to the display driver according to the AOD procedure execution rule.

S215. The display driver returns an OK message to the HWC to notify that power-on of the display screen is complete.

Because the IC chip of the display screen is not powered off previously, the display screen does not need to be powered on again, and the display driver directly returns the OK message to the HWC.

In comparison with the related technology, in this embodiment of this application, because the display screen is not powered off, power-on is not required in the AOD implementation process. As shown in the bold box in FIG. 9B, the display screen has no power-on action, thereby achieving a purpose of reducing time consumption.

S216. The HWC sends the AOD instruction to the display driver according to the AOD procedure execution rule.

S217. The display driver sends the AOD instruction to the display screen.

S218. The display screen displays the always on pattern in response to the AOD instruction.

A solution of the related technology is as follows: When a screen-off condition is met, the display screen usually disables the backlight panel, and controls the IC chip of the display screen to power off, to complete screen-off. Then, starting the AOD is triggered. According to the regular AOD procedure execution rule, the IC chip of the display screen is first controlled to power on, and then the display screen displays the always on pattern.

It may be learned from FIG. 9A and FIG. 9B that, in a process of starting the AOD procedure after screen-off is triggered, according to the solution provided in Embodiment 1 of this application, the display screen is not powered off first after screen-off is triggered, but the no-power-off indication message is delivered by the AOD application after screen-off is triggered. The no-power-off indication message sequentially passes through the TP service, the TP_HAL, and the TP driver, and then reaches the display driver. The no-power-off indication message is used to indicate the display driver to perform the no-power-off logic when receiving the power-off instruction. Then, when the display driver receives the power-off instruction, the display driver performs the no-power-off logic, that is, does not drive the IC chip of the display screen to power off, and then triggers the AOD. In the AOD implementation procedure, the display screen is not powered off, so that the always on pattern can be directly displayed after the AOD is triggered, to complete the always on display, without requiring that the display screen displays the always on pattern after being powered on as in the related technology. In the AOD implementation procedure provided in Embodiment 1 of this application, power-off of the display screen and power-on of the display screen are omitted, thereby greatly reducing a time required for starting the AOD after screen-off is triggered.

It should be noted that, although a process of delivering the no-power-off indication message to the display driver in Embodiment 1 of this application also takes a time, compared with a time consumed by power-off and power-on of the display screen, a time required for transmitting the no-power-off indication message is extremely short, which can be ignored.

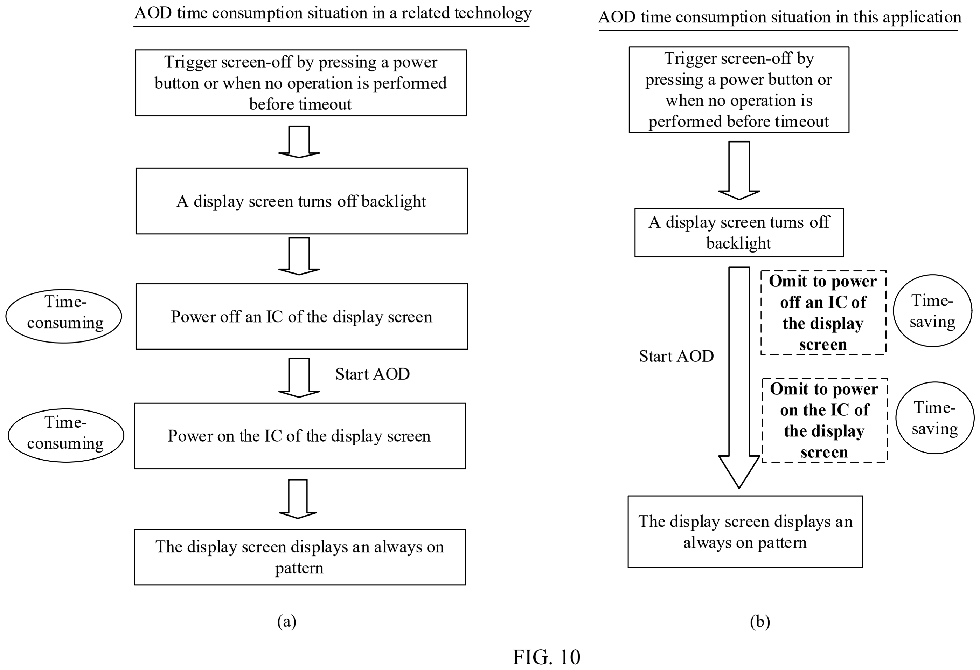

The foregoing respectively describes, by using FIG. 8 and FIG. 9A and FIG. 9B, starting the AOD procedure and the time sequence diagram after screen-off is triggered in this embodiment of this application. The following analyzes, with reference to FIG. 10, a time consumption situation of starting the AOD procedure after screen-off is triggered provided in Embodiment 1 of this application.

As shown in (a) in FIG. 10, in the related technology, after screen-off is triggered by pressing the power button by the user or when no operation is performed before timeout, the display screen turns off the backlight, and then the IC chip of the display screen is powered off. Then, starting the AOD procedure is triggered: The IC chip of the display screen is powered on first, and then the display driver controls the display screen to display the always on pattern obtained from the IC chip to complete the AOD procedure. Power-off of the display screen may cause relatively high time consumption. Similarly, power-on of the display screen after powering off may also cause relatively high time consumption.

As shown in (b) in FIG. 10, in Embodiment 1 of this application, when screen-off is triggered by pressing the power button by the user or when no operation is performed before timeout, the display screen turns off the backlight, but the IC chip of the display screen is not powered off. Because the IC chip of the display screen is not powered off, time consumption caused by power-off of the display screen can be saved. Then, starting the AOD procedure is triggered: The display screen displays the always on pattern to complete the AOD procedure. Because no further power-on is required, time consumption caused by power-on of the display screen can be saved. Therefore, starting the AOD procedure after screen-off is triggered provided in Embodiment 1 of this application can greatly reduce a time required for starting the AOD after screen-off is triggered, thereby improving user experience.

**Embodiment 2:** A power manager service module delivers a no-power-off indication message by using an AOD application and a display channel.

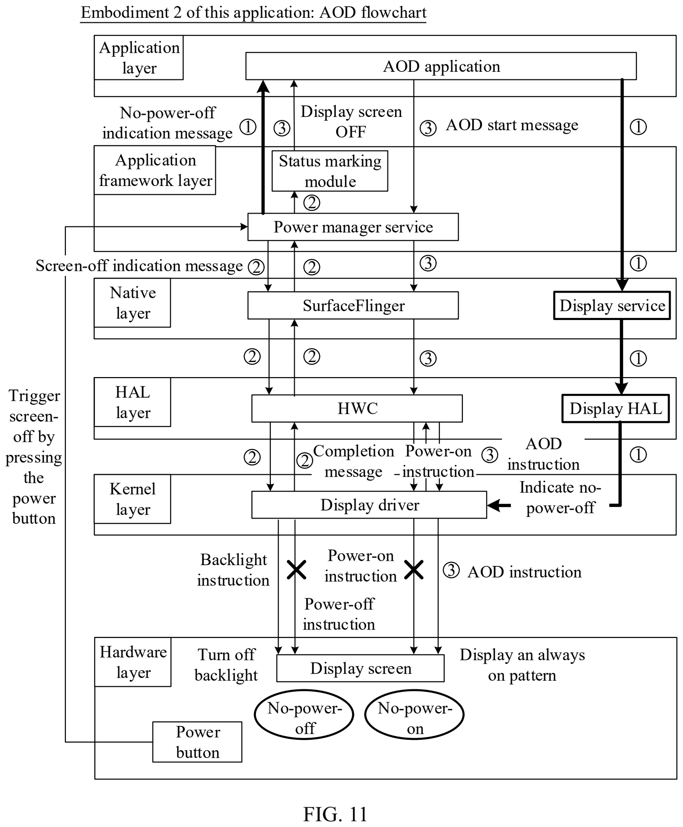

FIG. 11 is a schematic diagram of a software architecture for starting an AOD procedure after screen-off is triggered according to Embodiment 2 of this application. A procedure of starting AOD after screen-off is triggered may include two phases: A first phase: A procedure of triggering screen-off, indicating no-power-off, and completing screen-off; and a second phase: A procedure of triggering the AOD and completing the AOD.

First, it should be noted that a difference between Embodiment 2 and Embodiment 1 lies in that: In Embodiment 1, the no-power-off indication message delivered by the AOD application sequentially passes through the TP service, the TP_HAL, and the TP driver, and finally reaches the display driver. In Embodiment 2, the no-power-off indication message delivered by the AOD application sequentially passes through a display service and a display HAL, and finally reaches the display driver.

### First phase: The procedure of triggering screen-off, indicating no-power-off, and completing screen-off

When an electronic device is in a screen-on state, if a user presses a power button of the electronic device, the power manager service module of the electronic device receives a message that the user presses the power button of the electronic device.

Different from the related technical procedure shown in FIG. 6A and FIG. 6B, in this embodiment of this application, after the power manager service module receives the message that the user presses the power button of the electronic device, the power manager service module successively performs two actions:

First, referring to a procedure direction marked with ① in FIG. 11, the power manager service module reports the no-power-off indication message to the AOD application based on the message. The AOD application forwards the no-power-off indication message to the display driver at a lower layer. As shown in FIG. 11, the no-power-off indication message sequentially passes through the AOD application, the display service, and the display HAL, and then reaches the display driver. The no-power-off indication message is used to indicate the display driver to perform no-power-off logic when receiving a power-off instruction. It may be understood that if the display driver receives the power-off instruction, the display driver performs the no-power-off logic, that is, does not drive an IC chip of a display screen to power off.

Then, referring to a procedure direction marked with (2) in FIG. 11, the power manager service module delivers a screen-off indication message to the lower layer to indicate to start a screen-off procedure. As shown in FIG. 8, the screen-off indication message sequentially passes through a SurfaceFlinger service module and an HWC in the software architecture, and then reaches the display driver. Before receiving the screen-off indication message, the display driver has received the no-power-off indication message. In this case, in response to the screen-off indication message delivered by an upper layer in the software architecture, the display driver performs the no-power-off logic, that is, does not drive the IC chip of the display screen to power off, thereby reducing time consumption.

It should be noted that, different from the related technical procedure shown in FIG. 6A and FIG. 6B, in the solutions of this application, the display driver performs the no-power-off logic. As shown by "×" in FIG. 11, the display driver does not send the power-off instruction to the display screen. In this case, the IC chip of the display screen is not powered off.

After the display driver finishes performing the no-power-off logic, the display driver returns a completion message to the upper layer in the software architecture. The completion message sequentially passes through the HWC and the SurfaceFlinger service module in the software architecture, and finally reaches the power manager service module.

After receiving the completion message, the power manager service module indicates a status marking module to mark a status of the display screen as OFF. OFF indicates that the display screen is powered off.

### Second phase: The procedure of triggering the AOD and completing the AOD

Referring to a procedure direction marked with ③ in FIG. 11, the AOD application continuously monitors marked content of the status marking module. When the AOD application detects that a marked status of the display screen changes to OFF, the AOD application learns that the display screen is powered off, which meets an AOD trigger condition. In this case, starting the AOD procedure is triggered.

The AOD application delivers an AOD instruction to the lower layer, and the AOD instruction sequentially passes through the power manager service module, the SurfaceFlinger service module, the HWC, and the display driver in the software architecture, and finally reaches the display screen at a hardware layer.

Different from the related technology shown in FIG. 6A and FIG. 6B, in Embodiment 2 of this application, as shown in FIG. 11, the display screen is actually not powered off. In this case, the display screen does not need to perform a power-on procedure in response to the AOD instruction delivered by the upper layer in the software architecture, and the display screen can directly display the always on pattern to complete the always on display, thereby reducing time consumption.

It may be learned from FIG. 11 that, in a process of starting the AOD procedure after screen-off is triggered, according to the solution provided in Embodiment 2 of this application, the display screen is not powered off first after screen-off is triggered, but the no-power-off indication message is delivered by the AOD application after screen-off is triggered. The no-power-off indication message sequentially passes through the display service and the display HAL, and then reaches the display driver. The no-power-off indication message is used to indicate the display driver to perform the no-power-off logic when receiving the power-off instruction. Then, when the display driver receives the power-off instruction, the display driver performs the no-power-off logic, that is, does not drive the IC chip of the display screen to power off, and then triggers the AOD. In an AOD implementation procedure, the display screen is not powered off, so that the always on pattern can be directly displayed after the AOD is triggered, to complete the always on display, without requiring that the display screen is first powered on and then displays the always on pattern. In the AOD implementation procedure provided in Embodiment 2 of this application, power-off of the display screen and power-on of the display screen are omitted, thereby greatly reducing a time required for starting the AOD after screen-off is triggered.

It should be noted that, although a process of delivering the no-power-off indication message to the display driver in Embodiment 2 of this application also takes a time, this time consuming is extremely short. Compared with a time consumed by power-off and power-on of the display screen, a time for starting the AOD after screen-off is triggered is greatly reduced in the solution provided in Embodiment 2 of this application.

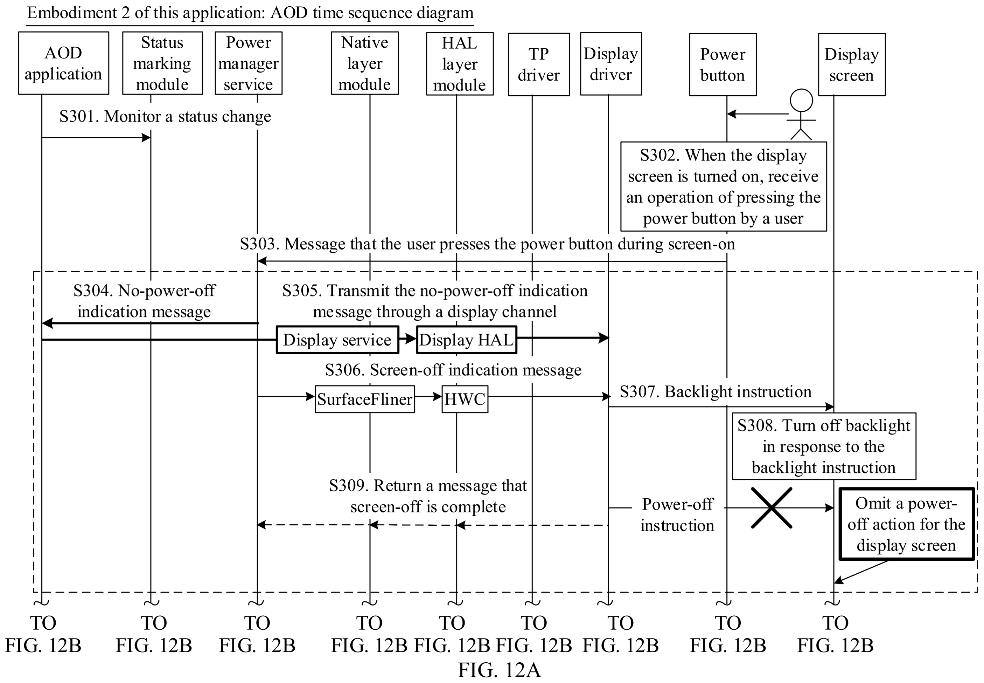

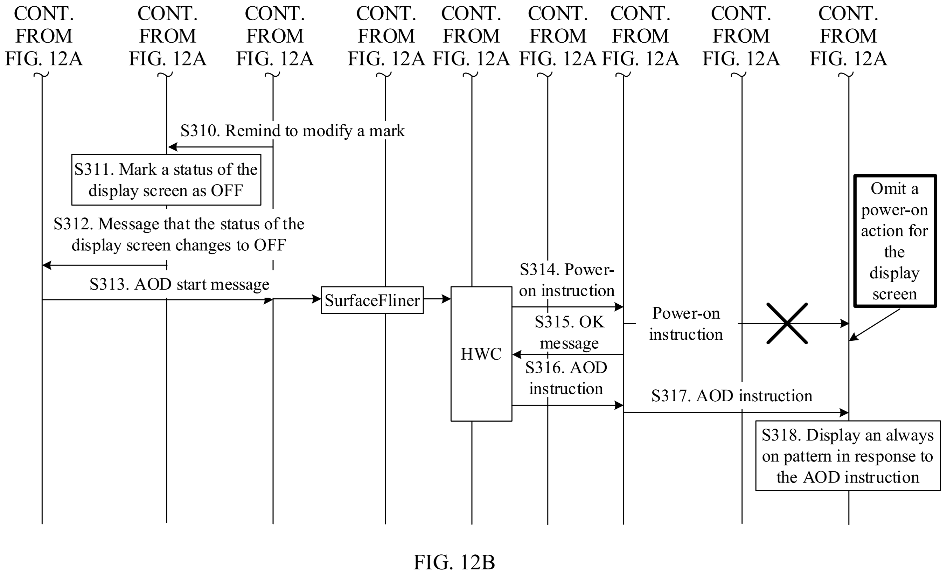

On a basis of FIG. 11, FIG. 12A and FIG. 12B are a schematic diagram of a time sequence of starting an AOD procedure after screen-off is triggered according to Embodiment 2 of this application. As shown in FIG. 12A and FIG. 12B, the method includes the following steps S301-S318.

S301. The AOD application monitors the marked content of the status marking module, to learn about a status change of power-on/power-off of the display screen.

The AOD application monitors in real time whether the marked content of the status marking module changes to OFF, and OFF indicates that the display screen is powered off.

When the AOD application detects that the marked content of the status marking module changes to OFF, the AOD application learns that the display screen is powered off. In this case, the AOD procedure starts. When the AOD application does not detect that the marked content of the status marking module changes to OFF, no response is made.

S302. When the display screen is turned on, the power button receives an operation of pressing the power button by the user.

S303. The power button reports, to the power manager service module, a message that the user presses the power button when the display screen is turned on.

When the power manager service module receives the message that the user presses the power button when the display screen is turned on, the power manager service module triggers an AOD start event.

It should be noted that, compared with the time sequence diagram in the related technology shown in FIG. 7, the time sequence diagram in Embodiment 2 of this application shown in FIG. 12A and FIG. 12B mainly differs in S304-S309 shown in a dashed-line box in FIG. 12A and S314-S318.

The following first describes a process of how to trigger no-power-off after the power manager service module receives a screen-off trigger message.

S304. The power manager service module reports the no-power-off indication message to an AOD module in response to the AOD start event.

S305. The AOD module delivers the no-power-off indication message by using the display channel, where the display channel includes the display service, the display HAL, and the display driver.

After passing through the display service, the no-power-off indication message reaches the display HAL, and then reaches the display driver.

The no-power-off indication message is used to indicate the display driver to perform the no-power-off logic when receiving the power-off instruction.

It should be noted that the display service, the display HAL, and the display driver are usually configured to process display data, which can ensure that the display screen is in a screen-on state. An improvement of Embodiment 2 of this application lies in that after screen-off is triggered, the no-power-off indication message is transferred to the display driver by using the display service and the display HAL, to control the display driver to perform the no-power-off logic, so that the IC chip of the display screen is not powered off after screen-off is triggered, and directly displays the always on pattern and then is powered off. In this way, the AOD procedure can be quickly entered after screen-off is triggered, thereby improving user experience.

In Embodiment 2, a transmission path of the no-power-off indication message may be as follows: the power manager service module--the AOD module--the display service--the display HAL--the display driver.

It may be understood that if the display driver receives the power-off instruction, the display driver performs the no-power-off logic, that is, does not drive the IC chip of the display screen to power off.

The foregoing steps describe a process in which the power manager service module delivers the no-power-off indication message to the display driver after receiving the screen-off trigger message. The following describes a process of how to complete power-off after the power manager service module receives the screen-off trigger message.

S307. The power manager service module delivers the screen-off indication message, where the screen-off indication message sequentially passes through the SurfaceFlinger service module and the HWC, and then reaches the display driver.

S308. The display driver performs the no-power-off logic in response to the screen-off indication message.

In comparison with the related technology, in Embodiment 2 of this application, the display driver performs the no-power-off logic, that is, does not drive the IC chip of the display screen to power off. As shown by "×" in FIG. 12A, the display screen does not receive the power-off instruction. Then, as shown by a bold box in FIG. 12A, a power-off action is omitted for the display screen, thereby achieving a purpose of reducing time consumption.

S309. The display driver returns a completion message to the upper layer, where the completion message sequentially passes through the HWC and the SurfaceFlinger service module, and finally reaches the power manager service module.

For specific implementations of S310-S318 in FIG. 12B, refer to specific implementations of S210-S218 in Embodiment 1. Details are not described herein again.

A solution of the related technology is as follows: When a screen-off condition is met, the display screen usually disables a backlight panel, and controls the IC chip of the display screen to power off, to complete screen-off. Then, starting the AOD is triggered. According to a regular AOD procedure execution rule, the IC chip of the display screen is first controlled to power on, and then the display screen displays the always on pattern.

In comparison with the related technology, in a process of starting the AOD procedure after screen-off is triggered, according to the solution provided in Embodiment 2 of this application, the display screen is not powered off first after screen-off is triggered, but the no-power-off indication message is delivered by the AOD application after screen-off is triggered. The no-power-off indication message sequentially passes through the display service and the display HAL, and then reaches the display driver. The no-power-off indication message is used to indicate the display driver to perform the no-power-off logic when receiving the power-off instruction. Then, when the display driver receives the power-off instruction, the display driver performs the no-power-off logic, that is, does not drive the IC chip of the display screen to power off, and then triggers the AOD. In an AOD implementation procedure, the display screen is not powered off, so that after the AOD is triggered, the display screen does not need to be powered on, and directly displays the always on pattern, to complete the always on display. In the AOD implementation procedure provided in Embodiment 2 of this application, power-off of the display screen and power-on of the display screen are omitted, thereby greatly reducing a time required for starting the AOD after screen-off is triggered.

It should be noted that, although a process of delivering the no-power-off indication message to the display driver in Embodiment 2 of this application also takes a time, compared with a time required for power-off and power-on of the display screen, a time required for delivering the no-power-off indication message is extremely short, which can be ignored.

According to Embodiment 2 of this application, after screen-off is triggered by pressing the power button by the user or when no operation is performed before timeout, the IC chip of the display screen is not powered off. Because the IC chip of the display screen is not powered off, time consumption caused by power-off of the IC chip of the display screen can be saved. Then, starting the AOD procedure is triggered: The display screen displays the always on pattern to complete the AOD procedure. Because the IC chip of the display screen does not need to be powered on again, time consumption caused by power-on of the IC chip of the display screen can be saved. Therefore, starting the AOD procedure after screen-off is triggered provided in Embodiment 2 of this application can greatly reduce a time required for starting the AOD after screen-off is triggered, thereby improving user experience.

**Embodiment 3:** A power manager service module delivers a no-power-off indication message through a touchscreen channel.

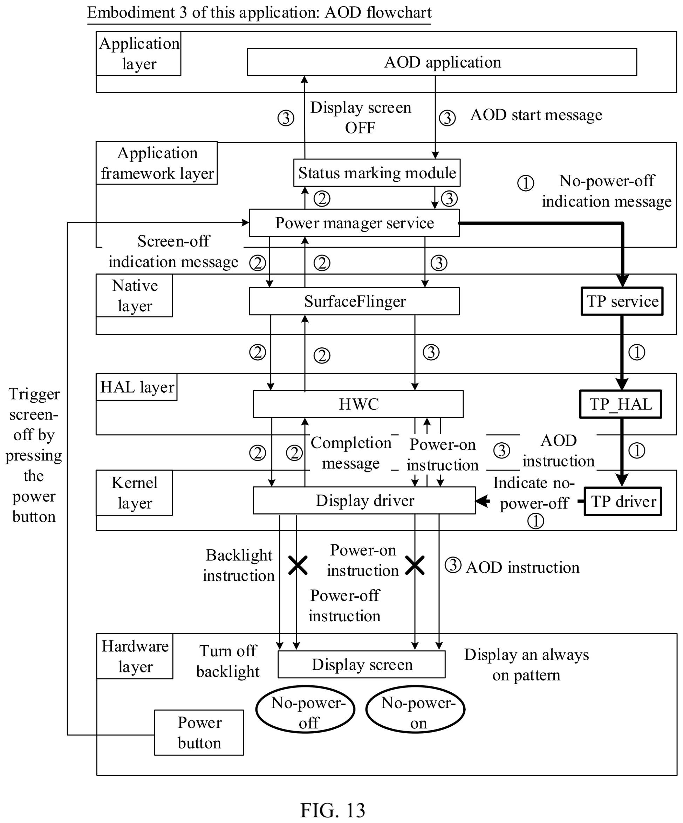

FIG. 13 is a schematic diagram of a software architecture for starting an AOD procedure after screen-off is triggered according to Embodiment 3 of this application. A procedure of starting AOD after screen-off is triggered may be divided into two phases: A first phase: A procedure of triggering screen-off, indicating no-power-off, and completing screen-off; and a second phase: A procedure of triggering the AOD and completing the AOD.

First, it should be noted that a difference between Embodiment 3 and each of Embodiment 1 and Embodiment 2 lies in that: In Embodiment 1 and Embodiment 2, after receiving a message that screen-off is triggered, the power manager service module reports the no-power-off indication message to the AOD application, and then the AOD application delivers the no-power-off indication message to the display driver. In Embodiment 3, after receiving a message that screen-off is triggered, the power manager service module makes a decision, and delivers the no-power-off indication message to a display driver, and the no-power-off indication message delivered by the power manager service module sequentially passes through a TP service, a TP_HAL, and a TP driver, and finally reaches the display driver.

**First phase: The procedure of triggering screen-off, indicating no-power-off, and completing screen-off**
When an electronic device is in a screen-on state, if a user presses a power button of the electronic device, the power manager service module of the electronic device receives a message that the user presses the power button of the electronic device.

Different from the related technical procedure shown in FIG. 6A and FIG. 6B, in Embodiment 3 of this application, after the power manager service module receives the message that the user presses the power button of the electronic device, the power manager service module successively performs two actions:

First, referring to a procedure direction marked with ① in FIG. 13, the power manager service module makes a decision based on the message, and then delivers the no-power-off indication message to the display driver at a lower layer. As shown in FIG. 13, an AOD application delivers the no-power-off indication message, and the no-power-off indication message sequentially passes through the TP service, the TP_HAL, and the TP driver, and then reaches the display driver. The no-power-off indication message is used to indicate the display driver to perform no-power-off logic when receiving a power-off instruction. It may be understood that if the display driver receives the power-off instruction, the display driver performs the no-power-off logic, that is, does not drive an IC chip of the display screen to power off.

Then, referring to a procedure direction marked with ② in FIG. 13, the power manager service module delivers a screen-off indication message to the lower layer, and the screen-off indication message sequentially passes through a SurfaceFlinger service module and an HWC in the software architecture, and then reaches the display driver. Before receiving the screen-off indication message, the display driver has received the no-power-off indication message. In this case, in response to the screen-off indication message delivered by an upper layer in the software architecture, the display driver performs the no-power-off logic, that is, does not drive the IC chip of the display screen to power off, thereby reducing time consumption.

It should be noted that, different from the related technical procedure shown in FIG. 6A and FIG. 6B, in the solutions of this application, the display driver performs the no-power-off logic. As shown by "×" in FIG. 13, the power-off instruction does not reach the display screen. In this case, the IC chip of the display screen is not powered off.

After the display driver finishes performing the no-power-off logic, the display driver returns a completion message to the upper layer in the software architecture. The completion message sequentially passes through the HWC and the SurfaceFlinger service module in the software architecture, and finally reaches the power manager service module.

After receiving the completion message, the power manager service module indicates a status marking module to mark a status of the display screen as OFF. OFF indicates that the display screen is powered off.

**Second phase: The procedure of triggering the AOD and completing the AOD**
Referring to a procedure direction marked with ③ in FIG. 13, the AOD application continuously monitors marked content of the status marking module. When the AOD application detects that a marked status of the display screen changes to OFF, the AOD application learns that the display screen is powered off, which meets an AOD trigger condition. In this case, starting the AOD procedure is triggered.

The AOD application delivers an AOD start message to the lower layer, and the AOD start message is used to indicate to start the AOD procedure. The AOD start message sequentially passes through the power manager service module and the SurfaceFlinger service module in the software architecture, and then reaches the HWC. The HWC delivers a power-on instruction to the display driver in response to the AOD start message. Because the display screen is not powered off, the display driver does not need to drive the IC chip of the display screen to power on. After the HWC receives an OK response message returned by the display driver, the HWC sends an AOD instruction to the display driver. The display driver obtains a preset always on pattern from the IC chip in response to the AOD instruction. Then, the display driver sends the AOD instruction and the always on pattern to the display screen, and then the display screen displays the always on pattern to complete the AOD procedure.

Different from the related technology shown in FIG. 6A and FIG. 6B, in Embodiment 3 of this application, as shown in FIG. 13, the display screen is actually not powered off. In this case, the display screen does not need to perform a power-on procedure in response to the AOD instruction delivered by the upper layer in the software architecture, and the display screen can directly display the always on pattern to complete the always on display, thereby reducing time consumption.

It may be learned from FIG. 13 that, in a process of entering the AOD procedure after screen-off is triggered, according to the solution provided in Embodiment 3 of this application, the display screen is not powered off first after screen-off is triggered, but the no-power-off indication message is delivered by the AOD after screen-off is triggered. The no-power-off indication message passes through the TP service, the TP_HAL, and the TP driver, and then reaches the display driver. The no-power-off indication message is used to indicate the display driver to perform the no-power-off logic when receiving the power-off instruction. Then, when the display driver receives the power-off instruction, the display driver performs the no-power-off logic, that is, does not drive the IC chip of the display screen to power off, and then triggers the AOD. In an AOD implementation procedure, the display screen is not powered off, so that the always on pattern can be directly displayed after the AOD is triggered, to complete the always on display, without requiring that the display screen displays the always on pattern after being powered on as in the related technology. In the AOD implementation procedure provided in Embodiment 3 of this application, power-off of the display screen and power-on of the display screen are omitted, thereby greatly reducing a time required for starting the AOD after screen-off is triggered.

It should be noted that, although a process of delivering the no-power-off indication message to the display driver in Embodiment 3 of this application also takes a time, this time consuming is extremely short. Compared with a time consumed by power-off and power-on of the display screen, a time for starting the AOD after screen-off is triggered is greatly reduced in the solution provided in Embodiment 3 of this application.

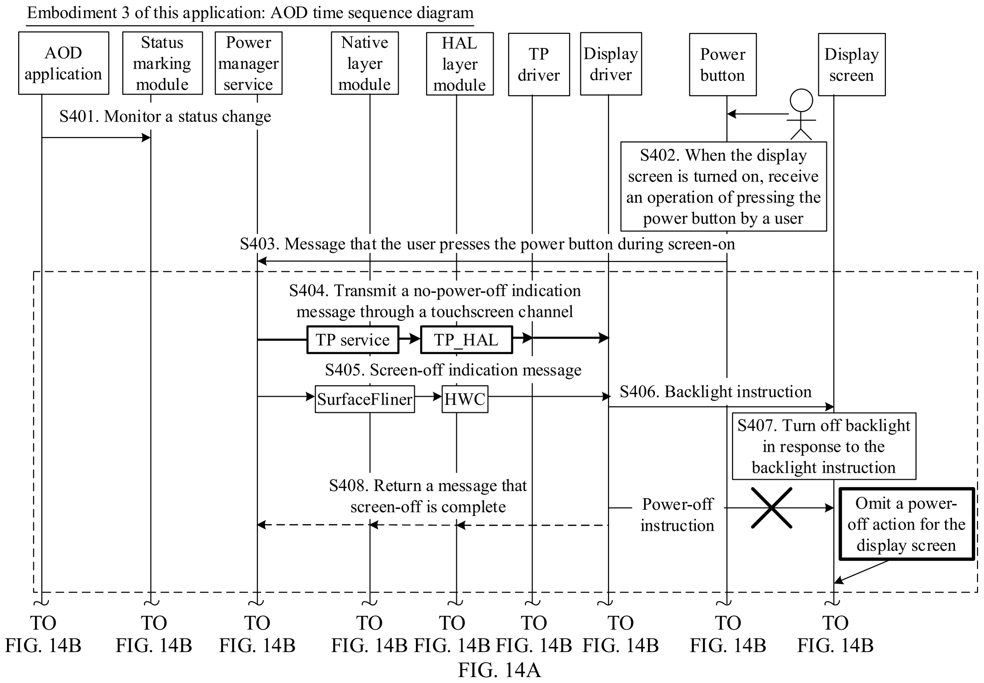

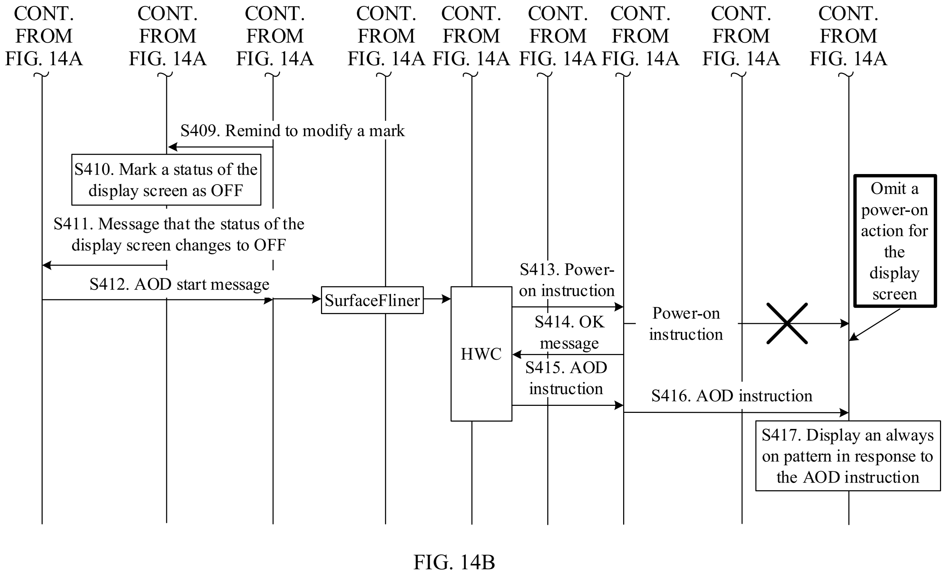

On a basis of FIG. 13, FIG. 14A and FIG. 14B are a schematic diagram of a time sequence of starting an AOD procedure after screen-off is triggered according to Embodiment 3 of this application. As shown in FIG. 14A and FIG. 14B, the method includes the following steps S401-S417.

S401. The AOD application monitors the marked content of the status marking module, to learn about a status change of power-on/power-off of the display screen.

The AOD application monitors in real time whether the marked content of the status marking module changes to OFF, and OFF indicates that the display screen is powered off.

When the AOD application detects that the marked content of the status marking module changes to OFF, the AOD application learns that the display screen is powered off. In this case, the AOD procedure starts. When the AOD application does not detect that the marked content of the status marking module changes to OFF, no response is made.

S402. When the display screen is turned on, the power button receives an operation of pressing the power button by the user.

S403. The power button reports, to the power manager service module, a message that the user presses the power button when the display screen is turned on.

When the power manager service module receives the message that the user presses the power button when the display screen is turned on, the power manager service module triggers an AOD start event.

It should be noted that, compared with the time sequence diagram in the related technology shown in FIG. 7, the time sequence diagram in Embodiment 3 of this application shown in FIG. 14A and FIG. 14B mainly differs in S404-S408 shown in a dashed-line box in FIG. 14A and S413-S417.

The following first describes a process of how to trigger no-power-off after the power manager service module receives a screen-off trigger message.

S404. The power manager service module delivers the no-power-off indication message through the touchscreen channel in response to the AOD start event, where the touchscreen channel includes the TP service, the TP_HAL, and the TP driver, and then the no-power-off indication message reaches the display driver.

The no-power-off indication message is used to indicate the display driver to perform the no-power-off logic when receiving the power-off instruction.

It should be noted that the TP service, the TP_HAL, and the TP driver are usually configured to process touchscreen data, which can ensure that the display screen is in a screen-on state. An improvement of Embodiment 3 of this application lies in that after screen-off is triggered, the no-power-off indication message is transferred to the display driver by using the TP service, the TP_HAL, and the TP driver, to control the display driver to perform the no-power-off logic, so that the IC chip of the display screen is not powered off after screen-off is triggered, and directly displays the always on pattern and then is powered off. In this way, the AOD procedure can be quickly entered after screen-off is triggered, thereby improving user experience.

In Embodiment 3, a transmission path of the no-power-off indication message may be as follows: the power manager service module--the TP service--the TP_HAL--the TP driver--the display driver.

It may be understood that if the display driver receives the power-off instruction, the display driver performs the no-power-off logic, that is, does not drive the IC chip of the display screen to power off.

The foregoing steps describe a process in which the power manager service module delivers the no-power-off indication message to the display driver after receiving the screen-off trigger message. The following describes a process of how to complete power-off after the power manager service module receives the screen-off trigger message.

S405. The power manager service module delivers the screen-off indication message, where the screen-off indication message sequentially passes through the SurfaceFlinger service module and the HWC, and then reaches the display driver.

S406. In response to the screen-off indication message, the display driver sends a backlight instruction to the display screen according to a screen-off procedure execution rule.

S407. The display screen turns off backlight in response to the backlight instruction.

It should be noted that, after receiving the screen-off indication message, the display driver does not send the power-off instruction to the display screen according to a regular screen-off procedure execution rule, but performs the no-power-off logic, that is, the display driver does not send the power-off instruction to the display screen.

In comparison with the related technology, in Embodiment 3 of this application, the display driver performs the no-power-off logic, that is, does not drive the IC chip of the display screen to power off. As shown by "×" in FIG. 14A, the display driver does not send the power-off instruction to the display screen. In this case, the IC chip of the display screen is not powered off. Then, as shown by a bold box in FIG. 14A, a power-off action is omitted for the display screen, thereby achieving a purpose of reducing time consumption.

S408. The display driver returns a completion message to the upper layer, where the completion message sequentially passes through the HWC and the SurfaceFlinger service module, and finally reaches the power manager service module.

For specific implementations of S409-S417 in FIG. 14B, refer to specific implementations of S210-S218 in Embodiment 1. Details are not described herein again.

A solution of the related technology is as follows: When a screen-off condition is met, the display screen usually disables a backlight panel, and controls the IC chip of the display screen to power off, to complete screen-off. Then, starting the AOD is triggered. According to a regular AOD procedure execution rule, the IC chip of the display screen is first controlled to power on, and then the display screen displays the always on pattern.

In comparison with the related technology, in a process of starting the AOD procedure after screen-off is triggered, according to the solution provided in Embodiment 3 of this application, the display screen is not powered off first after screen-off is triggered, but the no-power-off indication message is delivered by the AOD after screen-off is triggered. The no-power-off indication message passes through the TP service, the TP_HAL, and the TP driver, and then reaches the display driver. The no-power-off indication message is used to indicate the display driver to perform the no-power-off logic when receiving the power-off instruction. Then, when the display driver receives the power-off instruction, the display driver performs the no-power-off logic, that is, does not drive the IC chip of the display screen to power off, and then triggers the AOD. In the AOD implementation procedure, the display screen is not powered off, so that the always on pattern can be directly displayed after the AOD is triggered, to complete the always on display, without requiring the display screen to power on again. In the AOD implementation procedure provided in Embodiment 3 of this application, power-off of the display screen and power-on of the display screen are omitted, thereby greatly reducing a time required for starting the AOD after screen-off is triggered.

It should be noted that, although a process of delivering the no-power-off indication message to the display driver in Embodiment 3 of this application also takes a time, compared with a time consumed by power-off and power-on of the display screen, a time required for delivering the no-power-off indication message is extremely short, which can be ignored.

According to Embodiment 3, after screen-off is triggered by pressing the power button by the user or when no operation is performed before timeout, the IC chip of the display screen is not powered off. Because the IC chip of the display screen is not powered off, time consumption caused by power-off of the IC chip of the display screen can be saved. Then, starting the AOD procedure is triggered: The display screen displays the always on pattern to complete the AOD procedure. Because the IC chip of the display screen does not need to be powered on again, time consumption caused by power-on of the IC chip of the display screen can be saved. Therefore, starting the AOD procedure after screen-off is triggered provided in Embodiment 3 of this application can greatly reduce a time required for starting the AOD after screen-off is triggered, thereby improving user experience.

**Embodiment 4:** A power manager service module delivers a no-power-off indication message by using a display channel.

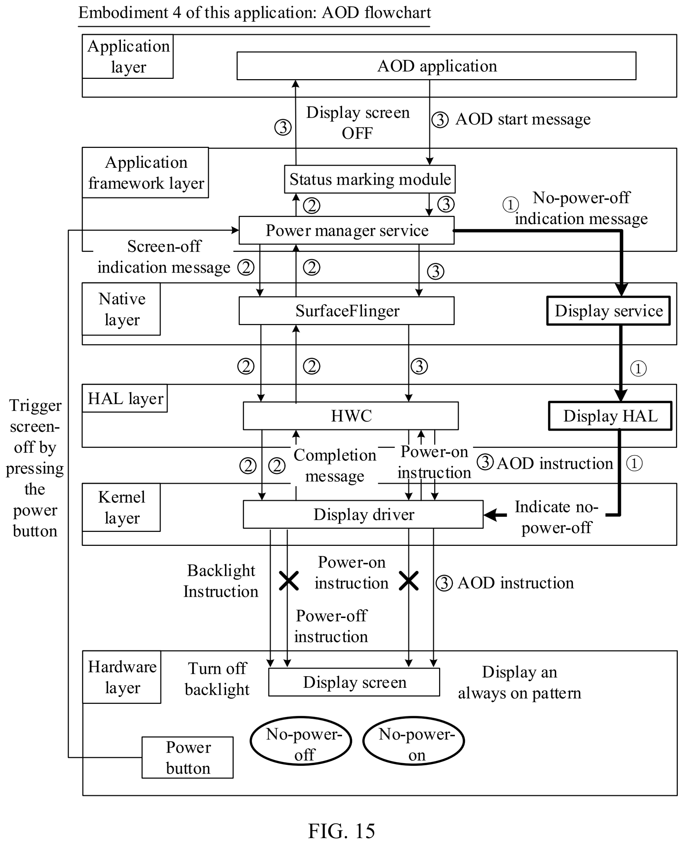

FIG. 15 is a schematic diagram of a software architecture for starting an AOD procedure after screen-off is triggered according to Embodiment 4 of this application. A procedure of starting AOD after screen-off is triggered may include two phases: A first phase: A procedure of triggering screen-off, indicating no-power-off, and completing screen-off; and a second phase: A procedure of triggering the AOD and completing the AOD.

It should be noted herein that a difference between Embodiment 4 and each of Embodiment 1, Embodiment 2, and Embodiment 3 lies in that:

In Embodiment 1 and Embodiment 2, after receiving a message that screen-off is triggered, the power manager service module reports the no-power-off indication message to the AOD application, and then the AOD application delivers the no-power-off indication message to the display driver.

In Embodiment 3, after receiving the message that screen-off is triggered, the power manager service module makes a decision, and delivers the no-power-off indication message to the display driver, and the no-power-off indication message delivered by the power manager service module sequentially passes through the TP service, the TP_HAL, and the TP driver, and then reaches the display driver.

In Embodiment 4, after receiving a message that screen-off is triggered, the power manager service module makes a decision, and delivers the no-power-off indication message to a display driver, and the no-power-off indication message delivered by the power manager service module sequentially passes through a display service and a display HAL, and then reaches the display driver.

**First phase: The procedure of triggering screen-off, indicating no-power-off, and completing screen-off**
When an electronic device is in a screen-on state, if a user presses a power button of the electronic device, the power manager service module of the electronic device receives a message that the user presses the power button of the electronic device.

Different from the related technical procedure shown in FIG. 6A and FIG. 6B, in Embodiment 4 of this application, after the power manager service module receives the message that the user presses the power button of the electronic device, the power manager service module successively performs two actions:
First, referring to a procedure direction marked with ① in FIG. 15, the power manager service module reports the no-power-off indication message to an AOD application based on the message. Then, the AOD application delivers the no-power-off indication message to the display driver. As shown in FIG. 15, the AOD application delivers the no-power-off indication message, and the no-power-off indication message sequentially passes through the display service and the display HAL, and then reaches the display driver. The no-power-off indication message is used to indicate the display driver to perform no-power-off logic when receiving a power-off instruction. It may be understood that if the display driver receives the power-off instruction, the display driver performs the no-power-off logic, that is, does not drive an IC chip of a display screen to power off.

Then, referring to a procedure direction marked with ② in FIG. 15, the power manager service module delivers a screen-off indication message to a lower layer, and the screen-off indication message sequentially passes through a SurfaceFlinger service module and an HWC in the software architecture, and then reaches the display driver. Before receiving the screen-off indication message, the display driver has received the no-power-off indication message. In this case, in response to the screen-off indication message delivered by an upper layer in the software architecture, the display driver performs the no-power-off logic, that is, does not drive the IC chip of the display screen to power off, thereby reducing time consumption.

It should be noted that, different from the related technical procedure shown in FIG. 6A and FIG. 6B, in the solutions of this application, the display driver performs the no-power-off logic. As shown by "×" in FIG. 15, the power-off instruction does not reach the display screen. In this case, the IC chip of the display screen is not powered off.

After the display driver finishes performing the no-power-off logic, the display driver returns a completion message to the upper layer in the software architecture. The completion message sequentially passes through the HWC and the SurfaceFlinger service module in the software architecture, and finally reaches the power manager service module.

After receiving the completion message, the power manager service module indicates a status marking module to mark a status of the display screen as OFF. OFF indicates that the display screen is powered off.

**Second phase: The procedure of triggering the AOD and completing the AOD**
Referring to a procedure direction marked with ③ in FIG. 15, the AOD application continuously monitors marked content of the status marking module. When the AOD application detects that a marked status of the display screen changes to OFF, the AOD application learns that the display screen is powered off, which meets an AOD trigger condition. In this case, starting the AOD procedure is triggered.

The AOD application delivers an AOD instruction to the lower layer, and the AOD instruction sequentially passes through the power manager service module, the SurfaceFlinger service module, the HWC, and the display driver in the software architecture, and finally reaches the display screen at a hardware layer.

Different from the related technology shown in FIG. 6A and FIG. 6B, in Embodiment 4 of this application, as shown in FIG. 15, the display screen is actually not powered off. In this case, the display screen does not need to perform a power-on procedure in response to the AOD instruction delivered by the upper layer in the software architecture, and the display screen can directly display an always on pattern to complete the always on display, thereby reducing time consumption.

It may be learned from FIG. 15 that, in a process of starting the AOD procedure after screen-off is triggered, according to the solution provided in Embodiment 4 of this application, the display screen is not powered off first after screen-off is triggered, but the no-power-off indication message is delivered by the AOD application after screen-off is triggered. The no-power-off indication message sequentially passes through the display service and the display HAL, and then reaches the display driver. The no-power-off indication message is used to indicate the display driver to perform the no-power-off logic when receiving the power-off instruction. Then, when the display driver receives the power-off instruction, the display driver performs the no-power-off logic, that is, does not drive the IC chip of the display screen to power off, and then triggers the AOD. In an AOD implementation procedure, the display screen is not powered off, so that the always on pattern can be directly displayed after the AOD is triggered, to complete the always on display, without requiring that the display screen is first powered on and then displays the always on pattern. In the AOD implementation procedure provided in Embodiment 4 of this application, power-off of the display screen and power-on of the display screen are omitted, thereby greatly reducing a time required for starting the AOD after screen-off is triggered.

It should be noted that, although a process of delivering the no-power-off indication message to the display driver in Embodiment 4 of this application also takes a time, this time consuming is extremely short. Compared with a time consumed by power-off and power-on of the display screen, a time for starting the AOD after screen-off is triggered is greatly reduced in the solution provided in Embodiment 4 of this application.

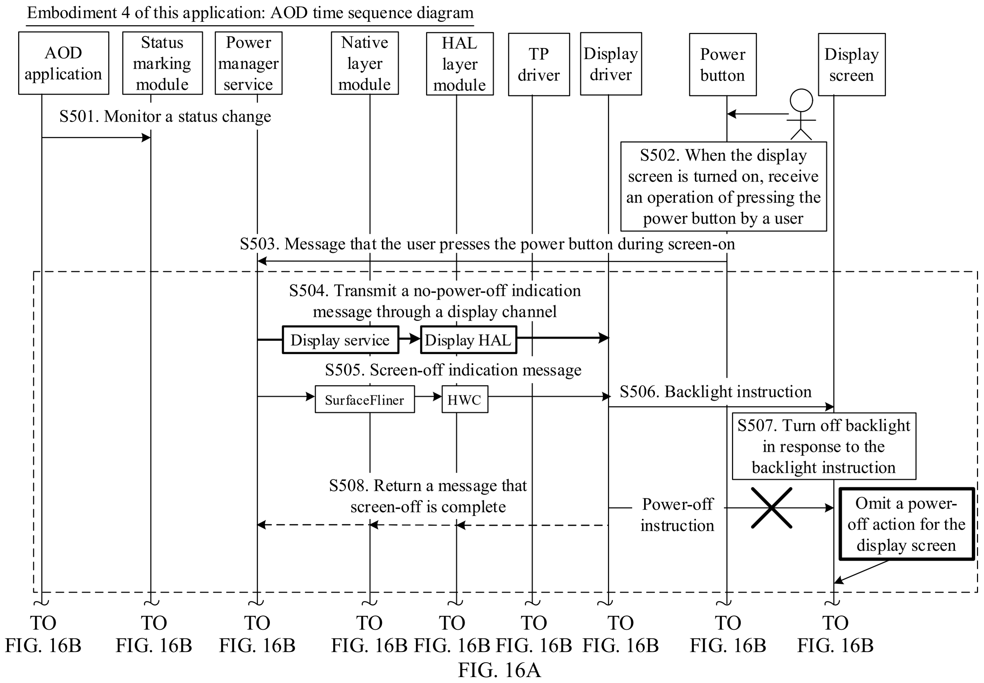

On a basis of FIG. 15, FIG. 16A and FIG. 16B are a schematic diagram of a time sequence of starting an AOD procedure after screen-off is triggered according to Embodiment 4 of this application. As shown in FIG. 16A and FIG. 16B, the method includes the following steps S501-S517.

S501. The AOD application monitors the marked content of the status marking module, to learn about a status change of power-on/power-off of the display screen.

The AOD application monitors in real time whether the marked content of the status marking module changes to OFF, and OFF indicates that the display screen is powered off.

When the AOD application detects that the marked content of the status marking module changes to OFF, the AOD application learns that the display screen is powered off. In this case, the AOD procedure starts. When the AOD application does not detect that the marked content of the status marking module changes to OFF, no response is made.

S502. When the display screen is turned on, the power button receives an operation of pressing the power button by the user.

S503. The power button reports, to the power manager service module, a message that the user presses the power button when the display screen is turned on.

When the power manager service module receives the message that the user presses the power button when the display screen is turned on, the power manager service module triggers an AOD start event.

It should be noted that, compared with the time sequence diagram in the related technology shown in FIG. 7, the time sequence diagram in Embodiment 4 of this application shown in FIG. 16A and FIG. 16B mainly differs in S504-S508 shown in a dashed-line box in FIG. 16A and S513-S517.

The following first describes a process of how to trigger no-power-off after the power manager service module receives a screen-off trigger message.

S504. In response to the AOD start event, the power manager service module delivers the no-power-off indication message to the display driver, where the no-power-off indication message sequentially passes through the display service and the display HAL, and then reaches the display driver.

S505. The display HAL sends the no-power-off indication message to the display driver.

The no-power-off indication message is used to indicate the display driver to perform the no-power-off logic when receiving the power-off instruction.

It should be noted that the display service, the display HAL, and the display driver are usually configured to process display data, which can ensure that the display screen is in a screen-on state. An improvement of Embodiment 4 of this application lies in that after screen-off is triggered, the no-power-off indication message is transferred to the display driver by using the display service and the display HAL, to control the display driver to perform the no-power-off logic, so that the IC chip of the display screen is not powered off after screen-off is triggered, and directly displays the always on pattern. In this way, the AOD procedure can be quickly entered after screen-off is triggered, thereby improving user experience.

In Embodiment 4, a transmission path of the no-power-off indication message may be as follows: the power manager service module--the display service--the display HAL--the display driver.

It may be understood that if the display driver receives the power-off instruction, the display driver performs the no-power-off logic, that is, does not drive the IC chip of the display screen to power off.

The foregoing steps describe a process in which the power manager service module delivers the no-power-off indication message to the display driver after receiving the screen-off trigger message. The following describes a process of how to complete power-off after the power manager service module receives the screen-off trigger message.

S506. The power manager service module delivers the screen-off indication message, where the screen-off indication message sequentially passes through the SurfaceFlinger service module and the HWC, and then reaches the display driver.

S507. The display driver performs the no-power-off logic in response to the screen-off indication message.

In comparison with the related technology, in Embodiment 4 of this application, the display driver performs the no-power-off logic, that is, does not drive the IC chip of the display screen to power off. As shown by "×" in FIG. 16A, the display screen does not receive the power-off instruction. Then, as shown by a bold box in FIG. 16A, a power-off action is omitted for the display screen, thereby achieving a purpose of reducing time consumption.

S508. After finishing performing the no-power-off logic, the display driver returns a completion message to the upper layer, where the completion message sequentially passes through the HWC and the SurfaceFlinger service module, and finally reaches the power manager service module.

For specific implementations of S509-S517 in FIG. 16B, refer to specific implementations of S210-S218 in Embodiment 1. Details are not described herein again.

A solution of the related technology is as follows: When a screen-off condition is met, the display screen usually disables a backlight panel, and controls the IC chip of the display screen to power off, to complete screen-off. Then, starting the AOD is triggered. According to a regular AOD procedure execution rule, the IC chip of the display screen is first controlled to power on, and then the display screen displays the always on pattern.

In comparison with the related technology, in a process of starting the AOD procedure after screen-off is triggered, according to the solution provided in Embodiment 4 of this application, the display screen is not powered off first after screen-off is triggered, but the no-power-off indication message is delivered by the AOD application after screen-off is triggered. The no-power-off indication message sequentially passes through the display service and the display HAL, and then reaches the display driver. The no-power-off indication message is used to indicate the display driver to perform the no-power-off logic when receiving the power-off instruction. Then, when the display driver receives the power-off instruction, the display driver performs the no-power-off logic, that is, does not drive the IC chip of the display screen to power off, and then triggers the AOD. In the AOD implementation procedure, the power-off action is omitted for the display screen, so that the always on pattern can be directly displayed after the AOD is triggered, to complete the always on display, without requiring the display screen to power on again, omitting a power-on action. In the AOD implementation procedure provided in Embodiment 4 of this application, power-off of the display screen and power-on of the display screen are omitted, thereby greatly reducing a time required for starting the AOD after screen-off is triggered.

It should be noted that, although a process of delivering the no-power-off indication message to the display driver in Embodiment 4 of this application also takes a time, compared with a time consumed by power-off and power-on of the display screen, a time required for transmitting the no-power-off indication message is extremely short, which can be ignored.

According to Embodiment 4 of this application, after screen-off is triggered by pressing the power button by the user or when no operation is performed before timeout, the IC chip of the display screen is not powered off. Because the IC chip of the display screen is not powered off, time consumption caused by power-off of the IC chip of the display screen can be saved. Then, starting the AOD procedure is triggered: The display screen displays the always on pattern to complete the AOD procedure. Because the IC chip of the display screen does not need to be powered on again, time consumption caused by power-on of the IC chip of the display screen can be saved. Therefore, starting the AOD procedure after screen-off is triggered provided in Embodiment 4 of this application can greatly reduce a time required for starting the AOD after screen-off is triggered, thereby improving user experience.

It should be noted that in the embodiments of this application, "greater than" may be replaced with "greater than or equal to", and "less than or equal to" may be replaced with "less than"; or "greater than or equal to" may be replaced with "greater than", and "less than" may be replaced with "less than or equal to".

The embodiments described in this specification may be independent solutions, or may be combined based on internal logic. These solutions all fall within the protection scope of this application.

This application further provides a chip. The chip is coupled to a memory. The chip is configured to read and execute a computer program or instructions stored in the memory, to perform the method in the foregoing embodiments.

This application further provides an electronic device. The electronic device includes a chip. The chip is configured to read and execute a computer program or instructions stored in a memory, so that the method in the foregoing embodiments is performed.

An embodiment further provides a computer-readable storage medium. The computer-readable storage medium stores computer instructions, and when the computer instructions are run on an electronic device, the electronic device is enabled to perform the foregoing related method steps to implement the always on display control method in the foregoing embodiments.

An embodiment further provides a computer program product. The computer-readable storage medium stores program code. When the computer program product runs on a computer, the computer is enabled to perform the foregoing related steps to implement the always on display control method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the always on display control method in the foregoing method embodiments.

The electronic device, the computer-readable storage medium, the computer program product, or the chip provided in the embodiments may be configured to perform the corresponding method provided above. Therefore, for beneficial effects that can be achieved by the electronic device, the computer-readable storage medium, the computer program product, or the chip, refer to the beneficial effects of the corresponding method provided above. Details are not described herein again.

In the several embodiments provided in this application, it should be understood that the disclosed apparatus and method may be implemented in another manner. For example, the described apparatus embodiment is merely an example. For example, the division into the modules or units is merely a logical function division, and there may be another division manner in actual implementation. For example, a plurality of units or components may be combined or integrated into another apparatus, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The foregoing descriptions are merely specific implementations of this application, but are not intended to limit the protection scope of this application. Any person skilled in the art can readily figure out variations or replacements within the technical scope disclosed in this application, and these variations or replacements shall fall within the protection scope of this application. Therefore, the protection scope of this application shall be subject to the protection scope of the claims.

## Claims

1. An always on display control method, wherein the method is applied to an electronic device, the electronic device comprises a display screen and a processor, the processor comprises an always on display AOD application, a display driver, and a power manager service module, and the method comprises:
when a screen-off trigger condition is met, receiving, by the display driver, a backlight instruction and a power-off instruction from the power manager service module;
sending, by the display driver, only the backlight instruction in the backlight instruction and the power-off instruction to the display screen, so that the display screen turns off backlight of the display screen based on the backlight instruction, and keeps an integrated circuit IC chip of the display screen in a power-on state;
receiving, by the display driver, an AOD display instruction from the AOD application; and
controlling, by the display driver in response to the AOD display instruction, the display screen to display an always on pattern.

2. The method according to claim 1, wherein the method further comprises:
when the screen-off trigger condition is met, receiving, by the display driver, a no-power-off indication message from the power manager service module; and
the sending, by the display driver, only the backlight instruction in the backlight instruction and the power-off instruction to the display screen comprises:
in response to the no-power-off indication message, sending, by the display driver, only the backlight instruction in the backlight instruction and the power-off instruction to the display screen.

3. The method according to claim 1, wherein after the sending, by the display driver, only the backlight instruction in the backlight instruction and the power-off instruction to the display screen, the method further comprises:
generating, by the display driver, a first message, wherein the first message is used to indicate that the IC chip of the display screen is in a power-off state; and
sending, by the display driver, the first message to the power manager service module.

4. The method according to claim 3, wherein the processor further comprises a surface drawing SurfaceFlinger service module and a hardware composer HWC; and
the AOD display instruction is triggered by the AOD application when the AOD application detects the first message; and after being triggered by the AOD application, the AOD display instruction reaches the display driver through transmission by using the SurfaceFlinger service module and the HWC.

5. The method according to claim 4, wherein the receiving, by the display driver, an AOD display instruction from the AOD application comprises:
receiving, by the display driver, a power-on instruction from the HWC, wherein the power-on instruction is triggered after the HWC receives the AOD display instruction;
returning, by the display driver, a response message of the power-on instruction to the HWC, wherein the response message is used to indicate that the display screen is in a power-on state; and
receiving, by the display driver, the AOD display instruction transmitted by using the HWC.

6. The method according to claim 4 or 5, wherein
the power-off instruction and the backlight instruction are triggered by the power manager service module, and reach the display driver after being transmitted by the SurfaceFlinger service module and the HWC; and
the first message is triggered by the display driver, and is returned to the power manager service module after being transmitted by the HWC and the SurfaceFlinger service module.

7. The method according to any one of claims 1 to 6, wherein the controlling, by the display driver in response to the AOD display instruction, the display screen to display an always on pattern comprises:
obtaining, by the display driver, the always on pattern from the IC chip of the display screen in response to the AOD display instruction; and
sending, by the display driver, the AOD display instruction and the always on pattern to the display screen.

8. The method according to claim 7, wherein after the controlling, by the display driver, the display screen to display an always on pattern, the method further comprises:
after duration in which the display screen displays the always on pattern is greater than or equal to first preset duration, sending, by the display driver, the power-off instruction to the display screen, to control the IC chip of the display screen to power off.

9. The method according to claim 2, wherein the processor further comprises a touchscreen service module, a touchscreen interface, and a touchscreen driver; and
the no-power-off indication message is generated by the power manager service module, and reaches the display driver after being transmitted by the AOD application, the touchscreen service module, the touchscreen interface, and the touchscreen driver; or
the no-power-off indication message is generated by the power manager service module, and reaches the display driver after being transmitted by the touchscreen service module, the touchscreen interface, and the touchscreen driver.

10. The method according to claim 2, wherein the processor further comprises a display service module and a display interface; and
the no-power-off indication message is generated by the power manager service module, and reaches the display driver after being transmitted by the AOD application, the display service module, and the display interface; or
the no-power-off indication message is generated by the power manager service module, and reaches the display driver after being transmitted by the display service module and the display interface.

11. The method according to any one of claims 1 to 10, wherein the screen-off trigger condition is as follows: when the display screen is in a screen-on state, an operation of pressing a power button by a user is received; or continuous duration in which no user operation is received when the display screen is in a screen-on state is greater than or equal to second preset duration.

12. An electronic device, comprising a display screen, a processor, a memory, and a computer program stored in the memory, wherein the processor is configured to execute the computer program, to enable the electronic device to implement the method according to any one of claims 1 to 11.

13. A computer-readable storage medium, wherein the computer-readable storage medium stores a computer program, and when the computer program is run on an electronic device, the electronic device is enabled to perform the method according to any one of claims 1 to 11.

14. A computer program product, wherein the computer program product comprises computer program code, and when the computer program code is run by an electronic device, the electronic device is enabled to perform the method according to any one of claims 1 to 11.
